# EUROPEAN PATENT APPLICATION

(11) **EP 4 716 228 A1**
(43) Date of publication of application: **25.03.2026**
(21) Application number: 24835234.6
(22) Date of filing: 19.06.2024
(51) Int. Cl.: H04N 23/69

(54) **DISPLAY METHOD, MOBILE TERMINAL, AND COMPUTER-READABLE STORAGE MEDIUM**

(30) Priority: 03.07.2023 CN 202310807236
(71) Applicant: Honor Device Co., Ltd., Shenzhen, Guangdong 518040 (CN)
(72) Inventor: YAO, Longshan, Shenzhen, Guangdong 518040 (CN)
(74) Representative: Goddar, Heinz J.
(86) International application number: PCT/CN2024/100202
(87) International publication number: WO 2025/007751

(57) **Abstract**

This application provides a display method, a mobile terminal, and a computer-readable storage medium, and relates to the field of terminal technologies. The mobile terminal sequentially receives a first zooming operation, at least one second zooming operation, and a third zooming operation, where zoom ratios of different zooming operations are different. The mobile terminal first responds to the first zooming operation, and obtains a first zoomed image at a zoom ratio of the first zooming operation, then responds to the third zooming operation and correspondingly obtains a third zoomed image, and displays the third zoomed image. The third zooming operation that is generated later may be processed and displayed in advance before the at least one second zooming operation that is received earlier. In comparison with a zooming display solution in which all zooming operations are sequentially processed according to a receiving sequence, time for the mobile terminal to respond to all or some image obtaining operations of the at least one second zooming operation is reduced, so that a display delay of a zooming operation received later is reduced, and hand-following smoothness of the zooming operation is improved.

## Description

This application claims priority to Chinese Patent Application No. 202310807236.5, filed with China National Intellectual Property Administration on July 03, 2023 and entitled "DISPLAY CONTROL METHOD, MOBILE TERMINAL, AND COMPUTER-READABLE STORAGE MEDIUM", which is incorporated herein by reference in its entirety.

### TECHNICAL FIELD

Embodiments of this application relate to the field of terminal technologies, and in particular, to a display method, a mobile terminal, and a computer-readable storage medium.

### BACKGROUND

With the development of science and technology, mobile terminals such as mobile phones have more and more powerful functions. A photographing function of the mobile terminal can implement front and rear photographing, image beautification processing, zooming, and the like. The mobile terminal is usually assembled with a plurality of groups of lenses. Different lenses correspond to different focal lengths, and lenses with different focal lengths can collect images of different distances, different field of views, and different definitions. A zooming operation (Zoom) of the mobile terminal is to adjust positions of several groups of lenses with different focal lengths, to change focal lengths of the adjusted lenses, so as to collect images of different focal lengths. When using the mobile terminal to perform photographing preview, a user may apply different zooming touch actions on a photographing preview interface of the mobile terminal. The mobile terminal detects a touch parameter of the zooming touch action of the user, to generate a corresponding zooming request, delivers the generated zooming request to a corresponding functional module to process the zooming request, and displays a finally obtained preview image.

When performing photographing preview, the user may have different zooming requirements successively, so that the user may trigger a plurality of zooming operations, and correspondingly, a plurality of zooming requests are generated. The mobile terminal sequentially processes the zooming requests and displays corresponding preview images according to a sequence in which the zooming requests are generated. As a result, a zooming request generated by the mobile terminal in real time may be processed only after being triggered for a period of time, and a preview image corresponding to the zooming request may also be displayed only after a period of time, and consequently, a delay from applying the zooming touch operation to displaying a zoomed preview image is long.

It can be learned that, when an existing mobile terminal performs photographing preview, a response delay of the zooming operation is long, and hand-following smoothness of the zooming operation is poor.

### SUMMARY

Embodiments of this application provide a display method, a mobile terminal, and a computer-readable storage medium, to implement a solution in which a zooming operation received later jumps to a zooming operation received earlier to cut in line for processing and display in advance, thereby reducing response and display delays of a newly received zooming operation, and optimizing hand-following smoothness of zooming display.

To achieve the foregoing objective, the following technical solutions are used in the embodiments of this application:
According to a first aspect, a display control method is provided. A mobile terminal successively receives a plurality of zooming operations, sequentially including a first zooming operation, at least one second zooming operation, and a third zooming operation. Receiving time of the first zooming operation is earlier than receiving time of the third zooming operation, the first zooming operation and the third zooming operation are spaced by at least one second zooming operation, and zoom ratios of different zooming operations may be different. The second zooming operation mentioned in this specification may be equivalent to the first zooming operation mentioned in the claims, and the third zooming operation mentioned in this specification may be equivalent to the second zooming operation mentioned in the claims, and details are not described one by one again. In addition, the first zooming operation mentioned in this specification may exist or may not exist during actual photographing, and this is not limited.

The mobile terminal first responds to the first zooming operation, and obtains a first zoomed image at a zoom ratio of the first zooming operation. Before responding to all the second zooming operations or displaying second zoomed images corresponding to all the second zooming operations, the mobile terminal first correspondingly responds to the third zooming operation, obtains a third zoomed image, and displays the third zoomed image. A process of responding to a zooming processing operation may sequentially include: zooming request generation, zooming request delivery, an image capture operation, an image signal front-end processing operation, a spatial alignment transform processing operation, an image signal post-end processing operation, and image sending for display.

In the display control method provided in this embodiment, response and display processes of continuous zooming operations are adjusted, so that the third zooming operation that is generated later can be processed and displayed in advance before the at least one second zooming operation that is received earlier. In comparison with a zooming display solution in which all zooming operations are sequentially processed according to a receiving sequence, all or a part of responding time of the at least one second zooming operation is reduced, so that a display delay of a zooming operation received later is reduced, and hand-following smoothness of the zooming operation is improved.

During specific execution, that the at least one second zooming operation is not completely responded means that image obtaining operations do not need to be performed for any second zooming operation in the at least one second zooming operation, or that the image obtaining operations need to be performed for some second zooming operations in the at least one second zooming operation, or some image obtaining operations, for example, only a spatial alignment transform processing operation or an image signal post-end processing operation, need to be performed for some second zooming operations.

According to a possible implementation of the first aspect, after the previous first zooming operation is responded to and the corresponding first zoomed image is displayed, and after the third zooming operation is received, the zoomed image corresponding to the at least one second zooming operation is no longer displayed, but the third zooming operation is responded to and the third zoomed image is displayed directly after the first zoomed image is displayed. Alternatively, only some image obtaining operations of one second zooming request after the first zoomed image are performed, and a corresponding zoomed image is not sent for display, but the third zooming operation received later directly jumps to be performed. The mobile terminal first displays, on a photographing interface, the first zoomed image corresponding to the first zooming operation, and directly displays the third zoomed image corresponding to the third zooming operation. The third zoomed image corresponding to the third zooming operation that is latest applied by the user is quickly displayed, and the hand-following smoothness is obviously improved.

In a possible implementation of the first aspect, each time a zooming operation is received on the photographing interface of the mobile terminal, a corresponding zooming request is generated first, and the zooming request is added to a request queue of zooming operations. In other words, when receiving the first zooming operation, the mobile terminal generates a corresponding first zooming request, and adds the corresponding first zooming request to the request queue. Next, the mobile terminal generates a corresponding second zooming request for the received at least one second zooming operation, and adds the corresponding second zooming request to the request queue. Then, when receiving the third zooming operation, the mobile terminal also generates a corresponding third zooming request, and adds the corresponding third zooming request to the request queue. The request queue is a first-in-first-out queue. A zooming request added first is first dequeued for processing, and a zooming request added later is subsequently dequeued for processing. It should be noted that, the mobile terminal may continuously receive a plurality of zooming operations, and zooming requests are continuously added to the queue and dequeued, which does not mean that a newly generated zooming request is added to the queue after a previous zooming request is dequeued.

The first zooming request that is first added in the queue may be first dequeued, and the image obtaining operation, including an image capture operation, an image processing operation, and the like, may be performed for the first zooming request that is dequeued, to obtain and display the first zoomed image. Similarly, when the third zooming request corresponding to the third zooming operation that is subsequently added in the queue is dequeued, the mobile terminal performs an image obtaining operation corresponding to the third zooming request, to obtain the third zoomed image, and displays the third zoomed image. Different from the existing solution in which at least one second zooming request needs to be first dequeued to perform an image obtaining operation and to be sent for display, and then the third zooming request is dequeued to perform an image obtaining operation and then to be sent for display, in the present application, the third zooming request can be processed in advance before the second zooming request is displayed. Based on a first-in-first-out principle of the request queue, the mobile terminal may replace a second zoom ratio of the second zooming request with a third zoom ratio of the third zooming request, so that a zoomed image corresponding to the third zoom ratio is obtained in advance and displayed in advance as the third zoomed image. Alternatively, the at least one second zooming request before the third zooming request may be all discarded after being dequeued, and no image obtaining operation is performed, or the image obtaining operation for the third zooming request is performed after only some image obtaining operations are performed, to ensure that the third zoomed image is obtained and displayed in advance.

In a possible implementation of the first aspect, when jumping to respond to the third zooming request, the mobile terminal first selects, as a target zooming request, a second zooming request suitable for the jump from second zooming requests corresponding to second zooming operations that are before the third zooming operation and whose corresponding zoomed images are not displayed yet, where time at which the target zooming request is added to the queue is earlier than time at which the third zooming request is added to the queue. When the target zooming request is dequeued, the mobile terminal jumps to perform the image obtaining operation of the third zooming request, and displays the obtained third zoomed image in advance. There may be a plurality of bases for selecting the second zooming request suitable for the jump. For example, a selection basis may be that a zoom ratio of the second zooming request is close to a zoom ratio of the third zooming request, or dequeuing time of the second zooming request is earlier, or image data or a processing process related to the zooming request is similar to image data or a processing process of the third zooming request.

After the target zooming request for jumping is determined for the third zooming request, there may be a plurality of manners of jumping to respond to the third zooming request.

An implementation of jumping to respond to the third zooming request is that: the third zoom ratio of the third zooming request jumps to the target zooming request to be processed in advance. Specifically, a target zoom ratio corresponding to the target zooming request is replaced with or modified to the third zoom ratio. In this way, when the target zooming request is dequeued, the image obtaining operation is actually performed for the target zooming request at the third zoom ratio, and a correspondingly obtained zoomed image is also the third zoomed image obtained at the third zoom ratio. In this case, it can ensure that the target zooming request in the request queue is responded to after being dequeued, and it can also ensure that the third zoomed image is obtained at the third zoom ratio and displayed in advance. It should be noted that, because the third zoom ratio of the third zooming request is already processed in advance with the target zooming request, the third zooming request can be directly discarded, or can be discarded when the third zooming request is dequeued. A part of the second zooming request between the target zooming request and the third zooming request may also be synchronously discarded, to ensure that a zoom ratio of a finally displayed zoomed image is consistent with a zoom ratio of a latest received third zooming operation.

Another implementation of jumping to respond to the third zooming request is processing the third zooming request in advance. According to the first-in-first-out principle, when the target zooming request is dequeued, all zooming requests between the target zooming request and the third zooming request may be directly dequeued and discarded, and then the third zooming request is dequeued, and the image obtaining operation corresponding to the third zooming request is performed, to obtain the third zoomed image. In this way, it can also ensure that the zoom ratio of the finally displayed zoomed image is the same as the zoom ratio of the latest received zooming operation.

It should be noted that, in the foregoing two solutions of jumping to respond to the third zooming request, the image obtaining operation for the target zooming request may not need to be performed at all, or some image obtaining operations for the target zooming request may be performed.

In a possible implementation of the first aspect, considering that a main factor affecting different zooming requests is the zoom ratio, zooming processing operations and obtained zoomed images corresponding to zooming requests having the same zoom ratio or similar zoom ratios are the same or similar. Therefore, when it is considered that a later third zooming request cuts in line for processing in advance, a second zooming request that is in the zooming requests generated earlier and whose zoom ratio is close to that of the third zooming requests may be used as the target zooming request that can be jumped to. During specific implementation, the mobile terminal may first set a preset range, and the preset range is used for limiting an allowed range of a ratio difference between zooming requests suitable for jumping. The preset range may be set according to focal lengths of lenses in the mobile terminal. For example, for different zoom ratios, focal lengths of lenses corresponding to the zoom ratios may be selected to set different preset ranges. In addition, considering that processing a later zooming request in advance may affect smoothness and timeliness of an entire zooming display process, the preset ratio may alternatively be set according to a smoothness requirement or a timeliness requirement for zoom switching performed by the mobile terminal. A higher smoothness requirement indicates a smaller preset range, and a higher timeliness requirement indicates a larger preset range.

The mobile terminal first obtains a ratio difference between a second zoom ratio corresponding to each second zooming request and the third zoom ratio of the third zooming request, and screens out a second zooming request having a ratio difference within the preset range as the target zooming request for jumping. In this case, there may be one or more selected target zooming requests. If there is one target zooming request, the target zooming request may be directly used as a zooming request to which the third zooming request can jump. If there are a plurality of target zooming requests, one target zooming request may be randomly selected from the plurality of target zooming requests as the target zooming request suitable for jumping of the third zooming request. Alternatively, the target zooming request more suitable for jumping may be selected from the plurality of target zooming requests with reference to another zooming parameter such as a real-time processing status or a lens type of each target zooming request.

In a possible implementation of the first aspect, a solution of selecting, based on the real-time status of each zooming request, the target zooming request suitable for jumping is provided. After receiving a zooming operation on the photographing interface, the mobile terminal immediately generates a corresponding zooming request, and adds the zooming request to the request queue to wait for response. According to the first-in-first-out principle, a status of a request in the request queue is a state of waiting to be dequeued, and a real-time status of a request dequeued from the request queue changes from the state of waiting to be dequeued to a dequeued state.

Further, there may be a plurality of processing states of the zooming request in the dequeued state, sequentially including: requesting delivery, waiting for image capture, image signal front-end processing, spatial alignment transform processing, image signal post-end processing, sending for display, and the like. The original image capture operation may be performed by a camera sensor in the mobile terminal, the zooming request is delivered to a camera driver, and the camera driver controls the camera sensor to capture an original image and transmit the captured original image to a subsequent data processing module. The data processing module mainly includes three modules, which are sequentially, according to a processing time sequence: an image signal front-end processing module that preliminarily crops the original image, a spatial alignment transform processing module that calculates cropping data, and an image signal post-end processing module that performs cropping again based on the cropping data. After performing cropping again, the image signal post-end processing module can obtain a zoomed image corresponding to the zooming request, and sends the zoomed image to a camera application of the mobile terminal for display. The camera application displays the received zoomed image on the photographing interface.

Relatively, a processing progress of a second zooming request in the dequeued state is faster than a processing progress of a second zooming request the state of waiting to be dequeued. If the third zooming request cuts in line to a position of the second zooming request in the dequeued state to be processed in advance, a zooming delay is shorter, and hand-following smoothness is better. An image obtaining operation for a zooming request in the state of waiting to be dequeued is not started yet. If the third zooming request cuts in line to a position of the second zooming request in the state of waiting to be dequeued, all image obtaining operations corresponding to the third zooming request start to be performed when the second zooming request is dequeued, so that the third zooming request can still be processed in advance and an image can be displayed in advance.

In a possible implementation of the first aspect, the mobile terminal may comprehensively select, with reference to the zoom ratio and the real-time status, the target zooming request suitable for jumping of the third zooming request. Specifically, the mobile terminal selects a second zooming request, a ratio difference between whose zoom ratio and the third zoom ratio is within the preset range, and whose real-time status is the dequeued state, as the target zooming request. In this way, smoothness and timeliness of the entire zooming display effect after the third zooming request cuts in line to be processed in advance are ensured.

In a possible implementation of the first aspect, considering that in an actual procedure of the image obtaining operations, there may be two or more zooming requests that are in the dequeued state and that are not sent for display yet in the mobile terminal at the same time, and these zooming requests may be respectively at a point of data collection, a point of image signal front-end processing, a point of spatial alignment transform processing, a point of image signal post-end processing, a point of waiting for sending for display, or the like, these zooming requests may all be used as the target zooming request to which the third zooming request can jump. Then, after candidate zooming requests, ratio differences between whose zoom ratios and the third zoom ratio are within the preset range, and whose real-time statuses are the dequeued state are screened out, a zooming request whose image obtaining operation is at a late point may be selected from these candidate zooming requests as the target zooming request, for example, a candidate zooming request whose image obtaining operation is at the point of image signal post-end processing or spatial alignment transformation processing operation may be preferentially used as the target zooming request for jumping. In this way, if the selected target zooming request is already in the image signal post-end processing operation or the spatial alignment transform processing operation, a target zoom ratio of the target zooming request may be modified to the third zoom ratio of the third zooming request, and the remaining image obtaining operations such as the image signal processing operation and the spatial alignment transform processing operation are performed at the third zoom ratio, so that a third preview image can be obtained at the third zoom ratio quickly, thereby further reducing response and display delays of the third zooming request.

In a possible implementation of the first aspect, impact of target zooming requests in different real-time statuses on the image obtaining operation of the third zooming request is described in detail. The foregoing step of jumping to perform the image obtaining operation corresponding to the third zooming request when the target zooming request is dequeued, to obtain the third zoomed image, and displaying the third zoomed image may include: The real-time status of the target zooming request is the state of waiting to be dequeued, that is, there is still one or more second zooming requests waiting to be processed or being processed ahead of the target zooming request. Therefore, according to the first-in-first-out principle, the target zooming request needs to wait first to be dequeued. When the target zooming request is dequeued, the mobile terminal jumps to perform all the image obtaining operations corresponding to the third zooming request, to obtain the third zoomed image. In this case, the second zooming request and the target zooming request before the third zooming request may be all directly discarded, or all image obtaining operations may be performed in advance by using the third zoom ratio of the third zooming request as the target zoom ratio of the target zooming request, to obtain a corresponding third zoomed image.

In addition, if the real-time status of the target zooming request is the dequeued state, based on a processing progress of the target zooming request, there may be only the spatial alignment transform processing operation or the image signal post-end processing operation remaining in the image obtaining operations of the target zooming request. In this case, the target zoom ratio corresponding to the target zooming request may be replaced with the third zoom ratio, and after the zoom ratio is replaced, the remaining image obtaining operation of the target zooming request is performed at the third zoom ratio after replacement, to quickly obtain the third zoomed image.

In a possible implementation of the first aspect, a related software module that is in the mobile terminal and that implements the foregoing display control is described. Specifically, the mobile terminal includes: a camera application, a camera service, and a hardware abstraction layer. The mobile terminal usually includes an application layer, a framework layer, a hardware abstraction layer, and a kernel layer from top to bottom. The application layer runs the camera application and other function applications, and can receive an input operation of a user, display related image data, and the like. The framework layer is assembled with the camera service and the like, and provides application programming interfaces and programming frameworks for the camera application and other function applications at the upper layer. The kernel layer is a layer between hardware and software. The kernel layer includes at least a camera driver, and the hardware abstraction layer may encapsulate a drive program at the kernel layer, and provide the framework layer with an interface for invoking, to shield implementation details of hardware at the bottom layer.

Each time receiving a zooming operation on the photographing interface, the camera application sends a zooming parameter corresponding to the zooming operation to the camera service; the camera service generates a zooming request corresponding to the zooming operation, adds the zooming request to a request queue, and sequentially delivers zooming requests in the request queue to the hardware abstraction layer; and the hardware abstraction layer perform an image obtaining operation corresponding to each zooming request, to obtain a zoomed image, and sends the obtained zoomed image to the camera application; and the camera application displays the zoomed image.

Specifically, the hardware abstraction layer includes an interface module, a camera sensor, and a data processing module. The interface module sends each received zooming request to the camera sensor; the camera sensor performs an exposure and image output operation according to each zooming request, to obtain a corresponding original image; and the data processing module performs a data processing operation on the original image of each zooming request, to obtain a corresponding zoomed image, and sends the zoomed image to the camera application.

In a possible implementation of the first aspect, to implement the display control method provided in this application, the mobile terminal further includes a selection module, and the hardware abstraction layer further includes an application module. The selection module determines a target zooming request to which the third zooming request jumps; the application module modifies a target zoom ratio of the target zooming request to the third zoom ratio; and the data processing module executes, an image obtaining operation corresponding to the modified target zooming request, to obtain the third zoomed image. Specific function modules are added to implement a cutting-in-line selection and implementation solution of the third zooming request.

In a possible implementation of the first aspect, a solution of selecting, according to a real-time status of each previous second zooming request, the target zooming request for jumping is further provided. After each second zooming request is added to the queue, the real-time status includes two types: a state of waiting to be dequeued or a dequeued state. A zooming request in the dequeued state is delivered, and is at a point of performing specific image obtaining operations, sequentially including, according to a time sequence of the image obtaining operations, a point of initial image capture operation, a point of image signal front-end processing operation, and a point of image signal post-end processing operation.

Relatively, a zooming request in the dequeued state is responded to earlier than a zooming request in the state of waiting to be dequeued. Further, in these zooming requests in the dequeued state, zooming requests located at the point of spatial alignment transform processing operation and at the point of signal post-end processing operation are responded to earlier. Therefore, to display the third zoomed image corresponding to the third zooming request in advance, a zooming request whose real-time status is the dequeued state may be selected. If there are a plurality of zooming requests in the dequeued state, a second zooming request whose real-time operation point after being dequeued is the point of image signal post-end processing operation or the point of spatial alignment transform processing operation may be selected and determined as the target zooming request. This solution, in which the target zooming request for jumping is selected only with reference to the real-time status and not depending on the zoom ratio, is more applicable to a one-way zooming scenario in which the zoom ratio is gradually increased or gradually decreased, for example, a one-way zooming scenario in which the zoom ratio is gradually increased from 1x to 10x, or the zoom ratio is gradually decreased from 20x to 1x.

According to a second aspect, a mobile terminal is provided. The mobile terminal has a function for implementing the display control method in the first aspect. The function may be implemented by using hardware, or may be implemented by hardware executing corresponding software. The hardware or software includes one or more modules corresponding to the foregoing functions.

According to a third aspect, a mobile terminal is provided. The mobile terminal includes: a camera application, a processor, and a memory, where the camera module and the memory are coupled to the processor. The memory is configured to store computer-executable instructions. When the mobile terminal runs, the processor executes the computer-executable instructions stored in the memory, to enable the mobile terminal to perform the display control method according to any one of the first aspect.

According to a fourth aspect, a display control apparatus is provided, including a receiving module, a responding module, and a display module. The receiving module is configured to: receive a plurality of zooming operations, and sequentially receive a first zooming operation, at least one second zooming operation, and a third zooming operation. Receiving time of the first zooming operation is earlier than receiving time of the third zooming operation, and the first zooming operation and the third zooming operation are spaced by at least one second zooming operation. The responding module is configured to: respond to the first zooming operation in the plurality of zooming operations, and the display module is configured to display a first zoomed image, where the first zoomed image is an image obtained at a first zoom ratio corresponding to the first zooming operation. The responding module is further configured to: respond to the third zooming operation in the plurality of zooming operations, and display a third zoomed image, where the third zoomed image is an image obtained at a third zoom ratio corresponding to the third zooming operation.

According to a fifth aspect, a computer-readable storage medium is provided. The computer-readable storage medium stores instructions. When the instructions are run on a computer, the computer is enabled to perform the display control method according to any one of the first aspect.

According to a sixth aspect, a computer program product including instructions is provided, and the computer program product, when running on a computer, causes the computer to perform the display control method in any one of the first aspect.

For technical effects brought by any one of the design manners in the third aspect to the sixth aspect, refer to technical effects brought by different design manners in the first aspect. Details are not described herein again.

### BRIEF DESCRIPTION OF DRAWINGS

FIG. 1 is a diagram of a photographing interface of a mobile terminal;
FIG. 2 is a diagram 1 of comparison between interfaces before and after a mobile terminal receives a zooming operation in an existing solution;
FIG. 3 is a diagram of an expected optimization effect corresponding to FIG. 2;
FIG. 4 is a diagram 2 of comparison between interfaces before and after a mobile terminal receives a zooming operation in an existing solution;
FIG. 5 is a diagram of an expected optimization effect corresponding to FIG. 4;
FIG. 6 is a schematic of an inner software architecture of a mobile terminal according to an embodiment of this application;
FIG. 7 is an internal schematic flowchart of a mobile terminal processing a zooming request according to an embodiment of this application;
FIG. 8 is an internal schematic flowchart of a mobile terminal processing a plurality of zooming requests according to an embodiment of this application;
FIG. 9 is a schematic flowchart of zooming request jumping processing in a display control method according to an embodiment of this application;
FIG. 10 is a diagram of comparison between procedures of a mobile terminal before and after applying a display control method according to an embodiment of this application;
FIG. 11 is a schematic flowchart of a display control method according to an embodiment of this application;
FIG. 12 is a diagram of implementing cutting-in-line of a request in a display control method according to an embodiment of this application; and
FIG. 13 is a diagram of a structure of a mobile terminal according to an embodiment of this application.

### DESCRIPTION OF EMBODIMENTS

Example embodiments of this application are described below with reference to the accompanying drawings, and various details of the embodiments of this application are included to facilitate understanding and should be considered merely as examples. Therefore, a person of ordinary skill in the art should be aware that a variety of changes and modifications can be made to the embodiments described here without departing from the scope and spirit of this application. Similarly, for clarity and conciseness, descriptions of well-known functions and structures are omitted in the following descriptions.

For ease of understanding, a part of technical knowledge of the embodiments of this application is first described herein.

Lenses of different focal lengths are set in a mobile terminal. A zooming parameter such as a zoom ratio (Zoom Ratio) is adjusted to adjust a field of view (Field of View, FOV) of a photographing interface, thereby achieving a technical effect of zooming in or zooming out on a photographed object in a photographing interface. In a preview scenario of shooting, video recording, or photographing, to obtain images of a photographed object of different sizes, a user applies a zooming operation on the photographing interface of the mobile terminal, and a camera application and related modules in the mobile terminal cooperate to respond to the zooming operation to obtain a zoomed image of a corresponding zoom ratio, and display the zoomed image on the photographing interface. A main application scenario of the display control method provided in the embodiments of this application includes a photographing preview scenario of a mobile phone, and descriptions are provided below by using the photographing preview scenario of the mobile phone. However, the provided display control method is not limited to being applicable only to the mobile phone, and is not limited to being applicable only to the photographing preview scenario.

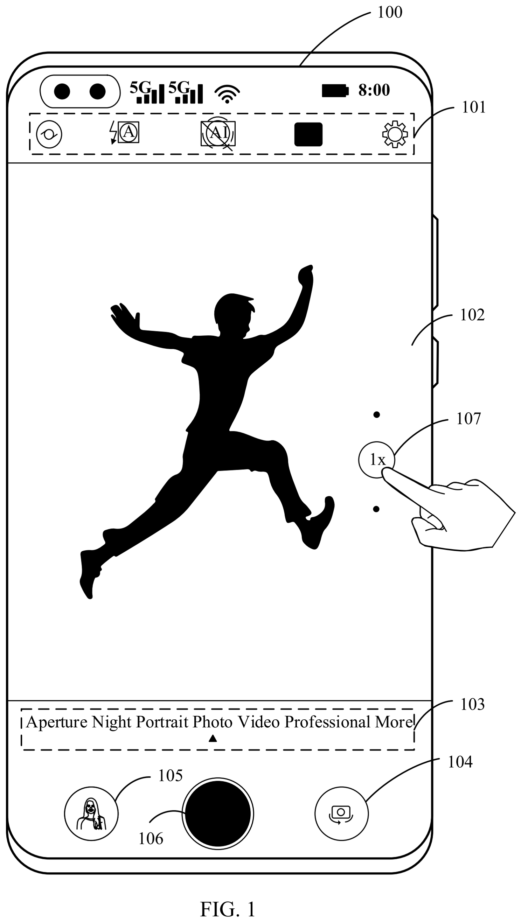

FIG. 1 is a diagram of a photographing interface of a mobile terminal. In the photographing interface, a user may apply a zooming operation, and the mobile terminal receives the zooming operation, responds to the zooming operation to obtain a corresponding zoomed image, and displays the zoomed image in the photographing interface. Specifically, as shown in FIG. 1, a photographing interface 100 of the mobile terminal mainly includes: a parameter control region 101, an image display region 102, a mode control region 103, a front and rear camera flipping control 104, a gallery control 105, a shutter control 106, and a zoom control 107. The parameter control region 101 includes a plurality of parameter controls, and each parameter control is configured to respond to a photographing parameter adjustment operation inputted by the user. The parameter controls in the parameter control region may include, but are not limited to: a flash control, an AI recognition switch control, a color standard control, and a more detailed camera setting control. The image display region 102 may be configured to display a preview image, and the preview image is an image captured by the mobile terminal in real time by using a camera lens. The mobile terminal may refresh display content in the image display region 102 in real time, so that the user previews an image captured by the camera lens currently. The mode control area 103 may include a plurality of mode controls corresponding to different photographing modes, for example, an aperture mode control, a night mode control, a portrait mode control, a photo mode control, a video mode control, a professional mode control, and a more mode control. Each mode control may be marked by using text information only, for example, "aperture", "night", "portrait", "photo", "video", "professional", and "more", or may be displayed by using an icon, or a combination of text information and an icon.

The zoom control 107 is configured to respond to a zooming operation performed by the user on the mobile terminal, to adjust an FOV of the image display region 102. "1 apparatus" displayed on the zoom control 107 indicates that a current optical zoom ratio of the mobile terminal is 1x ratio, and subsequent x indicates a zoom ratio. The user may apply the zooming operation through a tap operation or a slide operation on the zoom control 107, or may apply the zooming operation through a touch operation that does not act on the zoom control 107. For example, the mobile terminal may predefine that operations of fingers sliding towards each other or sliding away from each other on the photographing interface are zooming operations, or predefine that operations of rotatively sliding clockwise and rotatively sliding anticlockwise on the photographing interface are also zooming operations. The predefined touch operations act on the photographing interface, but do not necessarily act on the zooming control 107.

It is clear that, in other cases, the zooming operation received by the mobile terminal may alternatively be a zooming operation that does not need to act on the photographing interface, but is an adjustment operation that acts on a physical device on a surface or a side of the mobile terminal. For example, a physical key or a knob is disposed on a side of the mobile terminal as a zoom switch, and the physical key or the knob may associatively indicate a specific zoom value selection, a zoom ratio adjustment operation, or the like. The physical key or knob part may be individual physical devices dedicated to receiving the zooming operation, or may be an existing volume adjustment key or channel adjustment knob multiplexed in the photographing scene, which is not limited. This case may be more suitable for a scenario in which the mobile terminal is a vintage style mobile phone, an elderly phone, a card camera, or the like.

After receiving the zooming operation applied by the user, the mobile terminal may respond to the zooming operation. A process of responding to the zooming operation may include, but is not limited to: generating a zooming request based on the zooming operation, delivering the zooming request to perform an image capture operation and an image processing operation, obtaining a zoomed image, and finally, sending the zoomed image to the photographing interface for display. During actual operations, the user may continuously apply a plurality of zooming operations on the photographing interface, for example, apply a plurality of zooming operations by sliding the zoom control, or apply a plurality of zooming operations by continuously tapping the zoom control. Then, the mobile terminal sequentially receives the plurality of zooming operations, and separately performs, for each received zooming operation, a full set of zooming operation response procedures of generating the zooming request, performing the image capture operation and the image processing operation after delivering the zooming request, obtaining the zoomed image, and sending the zoomed image for display. Usually, each zooming operation response procedure needs processing duration of approximately 250 milliseconds. Therefore, if the user moves the hand away after continuously applying a plurality of zooming operations, the mobile terminal sequentially performs zooming operation response procedures of the zooming operations based on a sequence of the zooming operations. A final zooming operation needs to be responded to only after all the previous zooming operation response procedures are ended, and a zoomed image corresponding to the final zooming operation needs to be displayed only after the final zooming operation response procedure is ended. Therefore, waiting time of the mobile terminal from receiving the final zooming operation to displaying the zoomed image corresponding to the final zooming operation is long, that is, a delay of the zooming operation is long, and hand-following smoothness is poor.

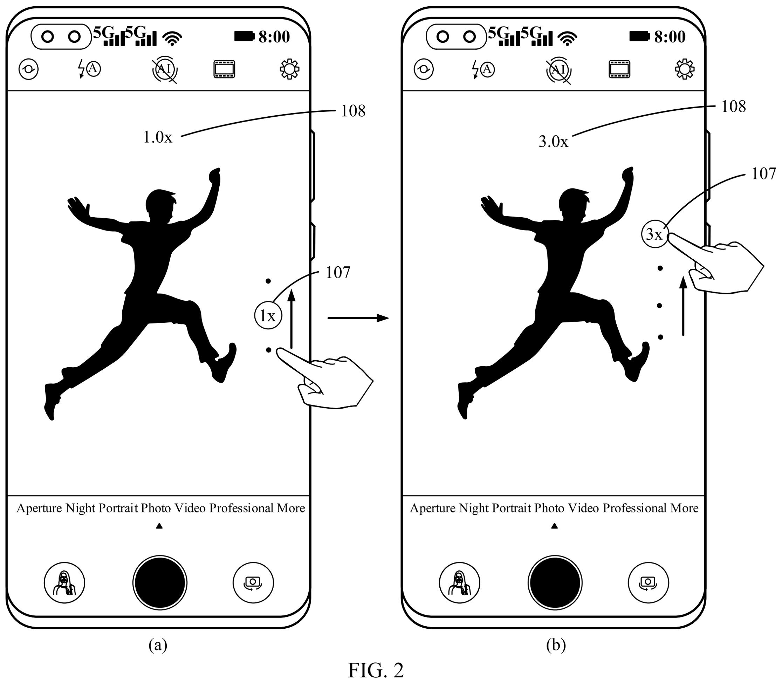

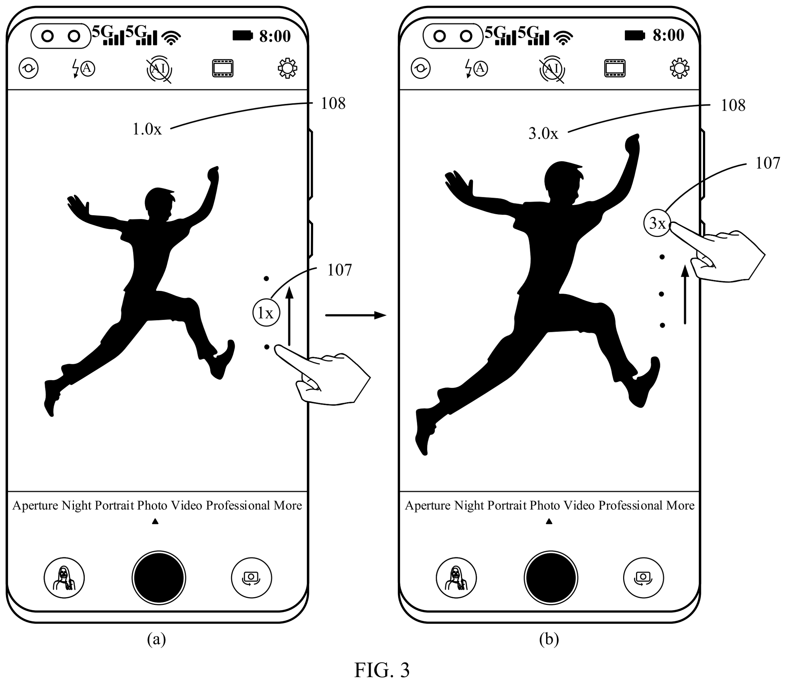

FIG. 2 is a schematic comparison diagram showing a delay after a zooming operation is applied to a zoom preview interface in the existing technology in a scenario in which a zooming operation is applied in a slide touch manner. As shown in (a) in FIG. 2, a finger of the user operates a slide control 107 at 1x, and a zoom ratio 108 displayed on the photographing interface is 1x, and a corresponding zoomed image is a zoomed image of 1x. As shown in (b) of FIG. 2, the finger of the user slides the slide control 107 from 1x to 3x. In this case, the zoom ratio 108 on the photographing interface has also been switched from 1x to 3x. However, because of a response delay, the zoomed image in the image display region 102 is not switched to a zoomed image of 3x, but the zoomed image of 1x is still displayed, resulting in poor hand-following smoothness. However, an expected photographing interface is shown in (a) and (b) in FIG. 3. The finger of the user slides the slide control 107 from 1x to 3x. In this case, the zoom ratio 108 on the photographing interface has also been switched from 1x to 3x, and the zoomed image in the image display region 102 is also switched to the zoomed image of 3x, so that the user can obviously perceive improvement in zooming hand-following smoothness.

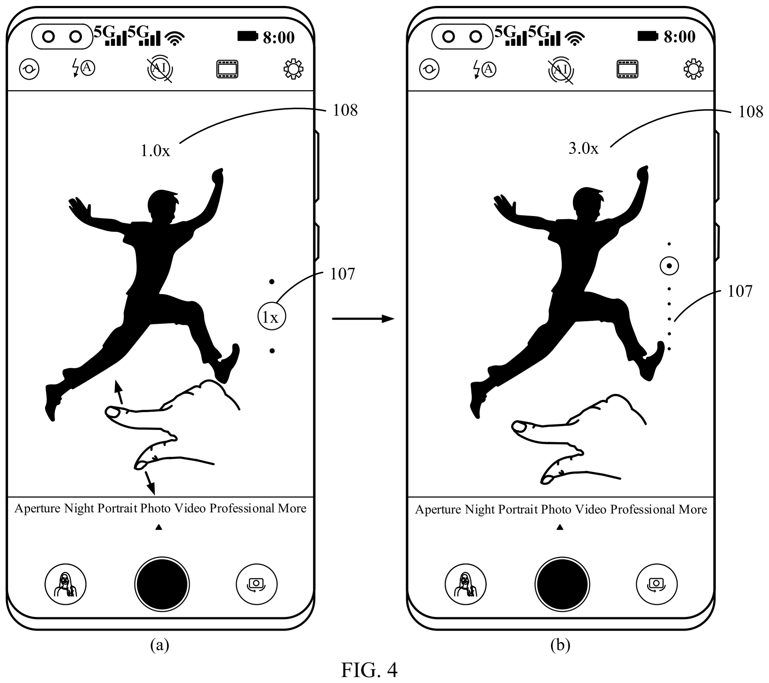

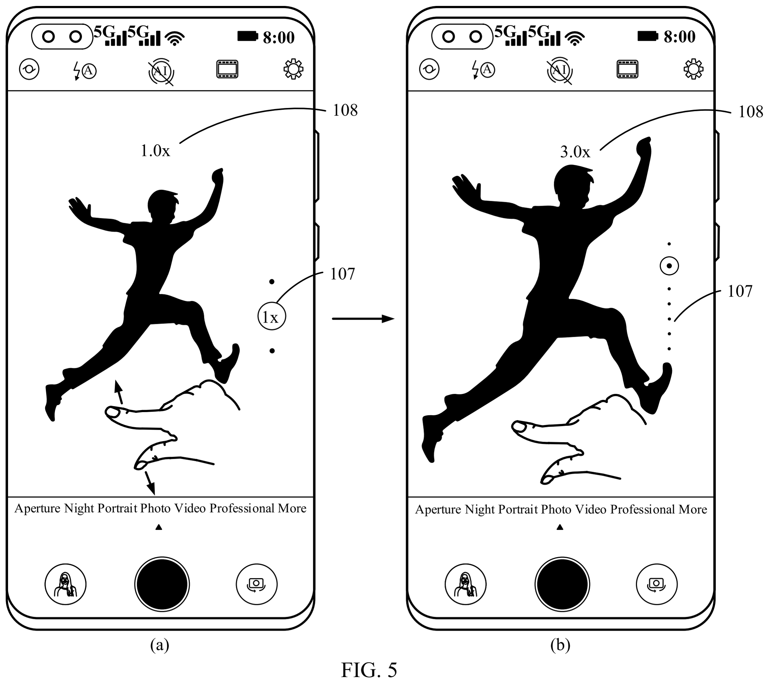

FIG. 4 is a schematic comparison diagram showing a delay after a zooming operation is applied to a zoom preview interface in the existing technology in a scenario in which a zooming operation is applied in a manner of fingers sliding relatively. As shown in (a) and (b) in FIG. 4, the finger of the user slides away from each other to increase the zoom ratio, and in this case, the slide control 107 automatically switches from 1x to 3x. In this case, the zoom ratio 108 on the photographing interface has also been switched from 1x to 3x. However, because of a response delay, the zoomed image in the image display region 102 is not switched to the zoomed image of 3x, but the zoomed image of 1x is still displayed, resulting in poor hand-following smoothness. Correspondingly, as shown in (a) and (b) in FIG. 5, an expected photographing interface is that the finger of the user slides away from each other, to increase the zoom ratio. In this case, the slide control 107 automatically switches from 1x to 3x. In this case, the zoom ratio 108 on the photographing interface has also been switched from 1x to 3x, and the zoomed image in the image display area 102 is switched from the zoomed image of 1x to the zoomed image of 3x, leading to good hand-following smoothness.

To obtain better hand-following smoothness, the embodiments of this application provide a display control method and a mobile terminal and a computer-readable storage medium for implementing the display control method. A zooming request generated later jumps to a previous zooming request to be processed in advance when the previous zooming request is processed, to reduce a response delay of the zooming request generated later. The provided display control method is applicable to a mobile terminal equipped with a camera and a related support module. The mobile terminal may be specifically a mobile phone, a tablet computer, a wearable device, a vehicle-mounted device, an augmented reality (Augmented Reality, AR) device/a virtual reality (Virtual Reality, VR) device, a notebook computer, an ultra-mobile personal computer (Ultra-Mobile Personal Computer, UMPC), a netbook, a personal digital assistant (Personal Digital Assistant, PDA), a dedicated camera (for example, a digital single lens reflex or a cube camera), or the like, which is not limited.

The mobile terminal receives a zooming operation on the photographing interface by a user, and generates, by invoking a camera application and a related module that run by an internal software architecture of the mobile terminal, a zoomed preview image of corresponding to the zooming touch operation. It should be noted that, the camera application to which the embodiments of this application are applicable may include any application on the mobile terminal that can implement a photographing preview function, for example, an original camera application or an image beautifying camera application, which is not limited.

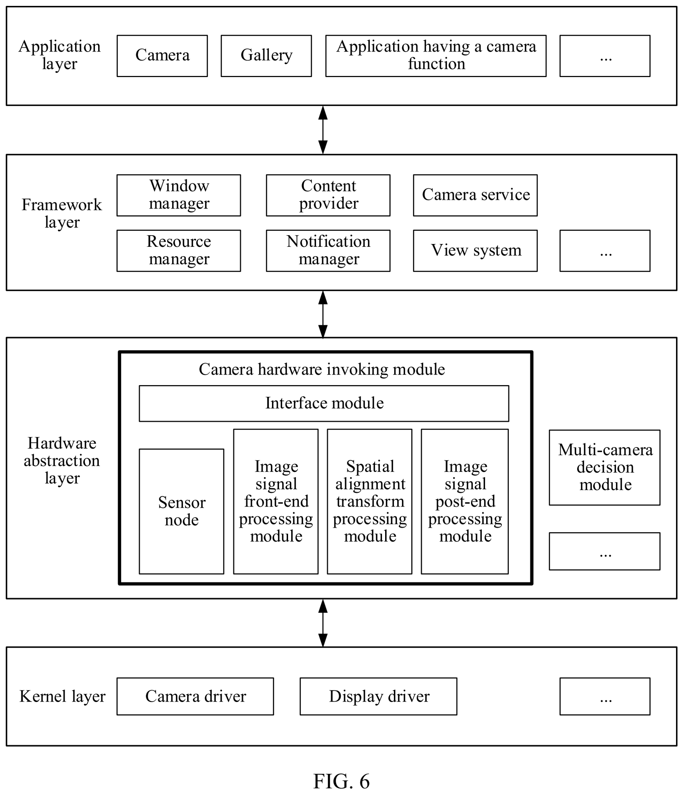

FIG. 6 shows a diagram of an internal architecture of the mobile terminal. A process of responding to a zooming operation by the mobile terminal is explained in detail below with reference to the internal architecture of the mobile terminal.

Specifically, the internal architecture of the mobile terminal is divided into four layers, from top to bottom, namely, an application layer (Application, APP), a framework layer (framework, FWK), a hardware abstraction layer (hardware abstraction layer, HAL), and a kernel (Kernel) layer (or a driver layer). It should be noted that, in addition to these main function layers, other function modules and the like may further be included, which is not limited.

The application layer may include a series of application packages, for example, applications such as a camera application, a gallery, and an application having a camera function. The application packages may further include applications such as phone, calendar, map, navigation, music, video, and messages.

The framework layer provides an application programming interface (Application Programming Interface, API) and a programming framework for the applications at the application layer. The application framework layer includes some predefined functions.

A camera service is run at the framework layer, and the camera service may be invoked by the camera application, to implement a photographing-related function. In addition, the framework layer may further include a window manager, a content provider, a view system, a phone manager, a resource manager, a notification manager, and the like. The window manager is configured to manage a window program. The window manager may obtain a size of a display screen, determine whether there is a status bar, perform screen locking, take a screenshot of the screen, and the like. The content provider is configured to store and obtain data and make the data accessible to an application. The data may include a video, an image, an audio, calls that are made and answered, a browsing history and a bookmark, a phone book, and the like. The view system includes visual controls such as a control for displaying a text and a control for display an image. The view system may be configured to construct an application. A display interface may include one or more views. For example, a display interface including a short message notification icon may include a view for displaying a text and a view for displaying a picture. The phone manager is configured to provide a communication function of the mobile terminal, for example, call status management (including connecting, hanging-up, and the like). The resource manager provides various resources such as a localized character string, an icon, an image, a layout file, and a video file for an application. The notification manager enables an application to display notification information in the status bar that may be used to convey a message of a notification type, where the message may disappear automatically after a short stay without user interaction. For example, the notification information notifies download completion, a message prompt, and the like. The notification information may alternatively be a notification that appears on a top status bar of the system in a form of a graph or a scroll bar text, for example, a notification of an application running on the background, or may be a notification that appears on the screen in a form of a dialog window. For example, the notification information may alternatively be text information prompted on the status bar, a prompt tone made, vibration, or blinking of an indicator light. It should be noted that the camera application may also invoke the content provider, the resource manager, the notification manager, the window manager, the view system, and the like based on an actual service requirement. This is not limited in the embodiments of this application.

The kernel layer is a layer between hardware and software. The kernel layer includes at least a camera driver. The camera driver may be used to drive a hardware module having a photographing function, such as a camera sensor (Camera Sensor). In other words, the camera driver needs to be responsible for data exchange with the camera sensor. The kernel layer may further include a display driver, an audio driver, a sensor driver, and the like. This is not limited in the embodiments of this application.

The hardware abstraction layer may encapsulate a drive program at the kernel layer, and provide the framework layer with an interface for invoking, to shield implementation details of hardware at the bottom layer. As shown in FIG. 6, the hardware abstraction layer may include a camera invoking processing module (Camera HAL), a multi-camera decision module, and the like. The camera invoking processing module is a camera (Camera) core software framework, and the camera invoking processing module includes an interface module, a sensor node (Sensor Node), a data processing module, and the like. In an implementation, the data processing module may include an image signal front-end processing (Image Signal Processing Front End, IFE) module, a spatial alignment transform (Spatial Alignment Transform, SAT) processing module, and an image signal post-end processing (Image Signal Processing Post End, IPE) module. Related processing related to the sensor node and the image signal front-end processing module belongs to processing of a realtime pipeline (Realtime Pipeline), and related processing related to the spatial alignment transform processing module and the image signal post-end processing module belongs to processing of an offline pipeline (Offline Pipeline). The sensor node, the data processing module, and the interface module are components in an image data and control instruction transmission pipeline in the camera invoking processing module.

Specifically, the sensor node may be a control node oriented to the camera sensor, and the sensor node may control the camera sensor by using the camera driver. The interface module may be a software interface oriented to the application framework layer, and is configured to exchange data with the application framework layer. It is clear that, the interface module may alternatively exchange data with the multi-camera decision module, the data processing module, the sensor node, and the like in the camera invoking processing module. The data processing module may process original image data transmitted back by the camera sensor. The image signal front-end processing module is configured to process a preview image collected by the camera sensor to perform preliminary cropping processing, to reserve an image margin (Margin). The spatial alignment transform processing module is configured to: perform spatial alignment on image data based on a zoom ratio and a spatial alignment transform processing algorithm, to determine cropping data and warping (Warp) data, so that the preview image is smoother. The image signal post-end processing module is configured to perform cropping and warping processing on preview image data based on a calculation result of the spatial alignment transform processing module.

The camera application may transfer, to the camera service at the framework layer, information such as a camera mode selected by a user and a zoom parameter, and then the camera service transfers the information to the multi-camera decision module by using the interface module of the hardware abstraction layer. The multi-camera decision module may determine, based on an application scenario, a camera sensor for image output, for example, a camera sensor of a front-facing camera lens or a camera sensor of a rear-facing camera lens, or for another example, a camera sensor of a primary camera lens, a camera sensor of a wide-angle camera lens, and a camera sensor of a long-focus camera lens in a rear-facing camera lens.

In a mobile terminal having a zoom function, the multi-camera decision module may further determine a to-be-switched target camera lens based on a zooming operation of the user, and enable a camera sensor of the target camera lens in advance by using the camera driver. In addition, the multi-camera decision module may further set a camera lens, that is currently used for image output, among a plurality of camera lenses whose camera sensors are enabled.

It may be understood that the layers in the software structure shown in FIG. 6 and components included in the layers do not constitute a specific limitation on the mobile terminal. In some other embodiments of this application, the mobile terminal may include more or fewer layers than those shown in the figure, and each layer may include more or fewer components. This is not limited in this application.

In addition, it may be understood that, to implement the zoom response method in the embodiments of this application, the mobile terminal includes corresponding hardware and/or software modules for performing various functions. Algorithm steps in the examples described with reference to the embodiments disclosed in this specification can be implemented by hardware or a combination of hardware and computer software in this application. Whether a function is performed by hardware or computer software driving hardware depends on particular applications and design constraints of the technical solutions. A person of skill in the art may use different methods to implement the described functions with reference to the embodiments for each particular application, but it should not be considered that the implementation goes beyond the scope of this application.

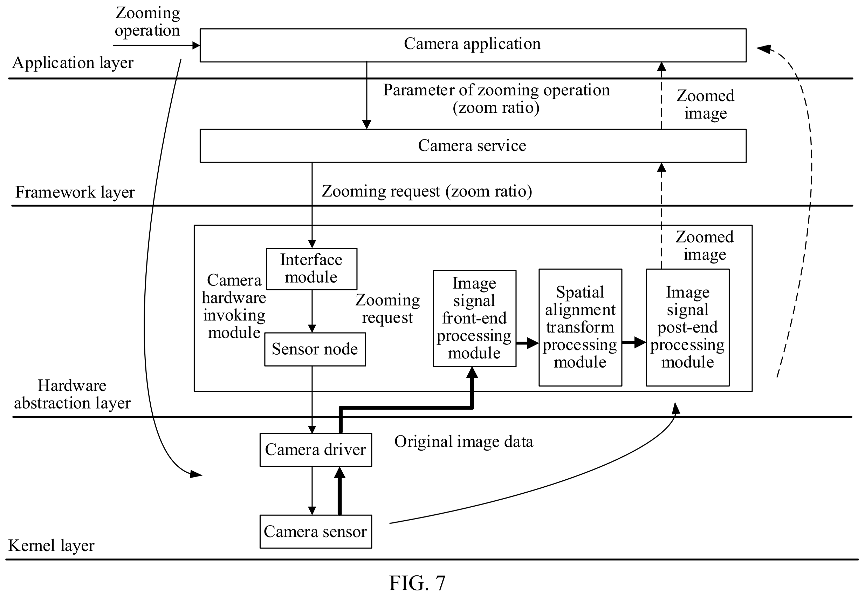

Based on the internal architecture diagram shown in FIG. 6, the camera application and the related support module are retained in the mobile terminal in FIG. 7, and a procedure of responding to a zooming operation by the mobile terminal is shown.

The procedure in which the mobile terminal responds to the zooming operation mainly includes two parts: a signal flow from top to bottom (shown by a solid arrow in FIG. 7), to be specific, after receiving a zooming operation, the mobile terminal generates a responding control signal to control the related module to perform an image obtaining operation, to obtain a zoomed image; and a data flow from bottom to top (shown by a dashed arrow in FIG. 7), to be specific, a camera sensor of the mobile terminal obtains a zoomed image through an image processing operation after capturing an original image, and sends the zoomed image to the camera application at the application layer for display.

Based on the internal architecture layer of the mobile terminal shown in FIG. 6, in a preview scenario of a camera application, a procedure in which function modules cooperate to perform a zooming touch operation may mainly include: receiving the zooming touch operation, generating a zooming request, processing the zooming request to obtain a preview image, and sending the preview image for display. During actual use, the mobile terminal may continuously receive a plurality of zooming touch operations and generate a plurality of zooming requests, and the mobile terminal sequentially processes the zooming requests to generate corresponding preview images, and sends the preview images for display. According to the display control method provided in the embodiments of this application, to reduce a response delay of a latest zoom touch operation, the latest zoom touch operation is processed in advance, and a normal sequence in which the mobile terminal processes a plurality of continuous zooming touch operations is changed. For ease of understanding, a common procedure in which the mobile terminal processes a zooming touch operation is first explained below.

The signal flow shown by the solid arrow in FIG. 7 mainly includes: The user applies a zooming operation on a photographing preview interface of the mobile terminal by tapping to select, sliding, or in another predefined operation manner, and a touch module of the mobile terminal responds to the zooming touch operation and generates a corresponding touch report event and sends the corresponding touch report event to the camera application at the application layer. After receiving the touch report event, the camera application converts, into a zoom ratio (Zoom Ratio) value, reported coordinate data corresponding to the touch report event, and sends the zoom ratio value to the camera service at the framework layer. The camera service generates a zooming request corresponding to the zoom ratio, and delivers the zooming request to the camera hardware invoking module at the hardware abstraction layer. The zooming request is sent to the sensor node. Based on the zooming request, the sensor node controls, by using the camera driver, the camera sensor to perform an exposure and image output operation.

The data flow shown by the dashed arrow in FIG. 7 mainly includes: After completing the exposure and image output operation, the camera sensor sends original image data corresponding to the zooming request to the image signal front-end processing module by using the camera driver. The image signal front-end processing module performs preliminary cropping processing on the original image data corresponding to the zooming request, and sends processed image data to the spatial alignment transform processing module. The image signal front-end processing module may perform, based on a zoom ratio corresponding to the zooming request, preliminary cropping processing on the original image data, and reserves an image margin region, so that the spatial alignment transform processing module performs spatial alignment processing on an image. The spatial alignment transform processing module performs image spatial alignment processing based on the zoom ratio corresponding to the zooming request and the related spatial alignment transform processing algorithm, calculates cropping data and warping data corresponding to the image data, and sends a calculation result and image data corresponding to the zooming request to the image signal post-end processing module. The image signal post-end processing module performs, based on the calculation result of the spatial alignment transform processing, a cropping operation and an image warping operation again on the image data corresponding to the zooming request, to obtain a preview image corresponding to the zooming request, and then sends the preview image to the camera application at the application layer for preview display.

It should be noted that in the process in which the original image outputted from the camera sensor is sent for display sequentially through the image signal front-end processing module, the spatial alignment transform processing module, and the image signal post-end processing module, in addition to a data stream of image data transmission, a signal stream including various data processing instructions and parameters is also transmitted.

FIG. 7 shows a case in which the mobile terminal processes a zooming request. In a preview scenario of the camera application, the mobile terminal may continuously receive a plurality of zooming operations. In this case, the internal camera application and a related support module of the mobile terminal need to respond to the plurality of zooming operations in sequence. Each time receiving a zooming operation, the camera application generates a corresponding zoom ratio based on a touch report event corresponding to the zooming operation, and sends the zoom ratio to the camera service, and the camera service generates a corresponding zooming request. Therefore, when the plurality of zooming operations are continuously received, the camera service continuously generates a plurality of corresponding zooming requests, and zoom ratios of different requests may be different.

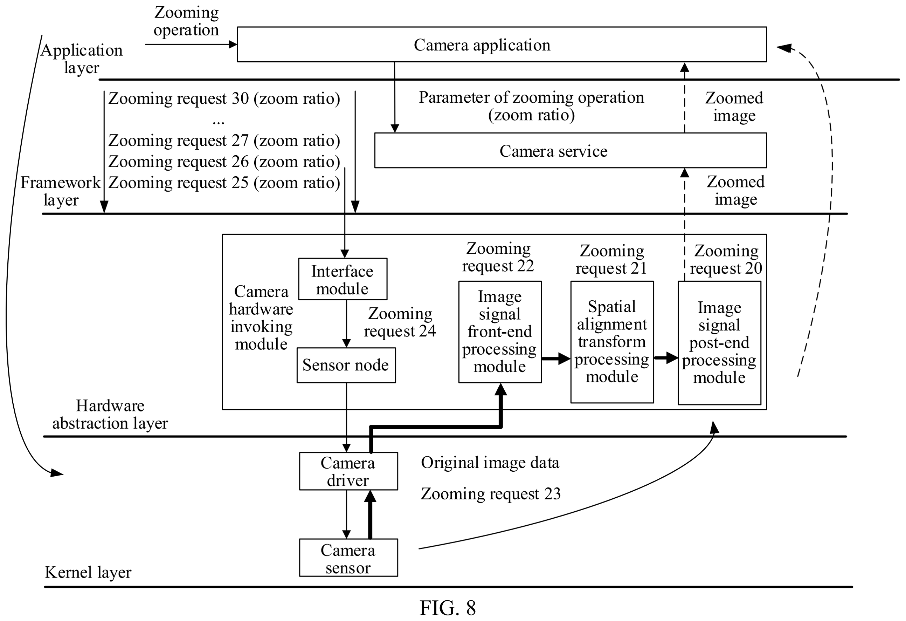

As shown in FIG. 8, the camera service may maintain a request queue, and add each newly generated zooming request to the request queue. The request queue is a first-in-first-out queue. A zooming request that first enters the queue is first dequeued and delivered to the hardware abstraction layer for an image obtaining operation. A zooming request that has not been processed waiting to be processed in the request queue, and a newly generated zooming request is added to the tail of the request queue. As shown in FIG. 8, it is assumed that 30 zooming requests are continuously generated currently, a newly generated zooming request 30 is at the tail of the request queue, all zooming requests before a zooming request 20 have been processed, the zooming request 20 to a zooming request 24 have all been dequeued and not all image obtaining operations have been completed, and a zooming request 25 to the zooming request 30 are all in the request queue waiting to be dequeued and responded to.

It can be learned from FIG. 8 that, each zooming request delivered by the camera service undergoes, in the camera hardware invoking module, data processing operations such as image data capture by the sensor node, preliminary cropping processing, cropping data and warping data calculation, re-cropping processing, and image distortion processing, and then a corresponding preview image can be obtained and sent for display. Time from receiving each zooming operation to the preview display is long, and the response is slow.

When a camera preview function is actually used, although a user continuously applies a plurality of zooming operations through tapping to select, sliding, and the like, to indicate different zooming requirements, a latest generated zooming request is generally closer to an actual zooming requirement of the user. Some previous zooming touch operations before the latest zooming request may be zooming touch operations unintentionally triggered in the sliding process, or may be zooming requirements that the user needs at a previous moment but may no longer need at the current moment. In other words, after the zooming request is generated, some previous zooming requests before the zooming request may not need to be processed, previewed, and displayed. This is a factor that the zooming request can be processed in advance by cutting in line.

In addition, image data sources and data processing operations involved in processing different zooming requests are associated, to some extent, with zooming parameters such as zoom ratios and lens focal lengths corresponding to the zooming requests. It can be learned from the foregoing zooming request processing procedure corresponding to FIG. 8 that, after the zooming request is delivered to the camera hardware invoking module, the sensor node first controls, by using the camera driver, the camera sensor to perform the exposure and image output operation, and the controlled camera sensor is a camera sensor corresponding to the zoom ratio. Subsequent data processing depends on the original preview image captured by the camera sensor, to perform preliminary cropping processing, cropping and warping data calculation, re-cropping image distortion processing corresponding to the zoom ratio. When an object photographed by the camera in the preview scene usually remains unchanged, if zoom ratios of different zooming requests are close (for example, a difference is within 0.5x, 1x, or 1.5x), or are within a focal length range of a same lens type, original preview images obtained by the sensor node by performing the exposure and image output operation are also similar or even the same, and data or calculation amounts of subsequent preliminary cropping processing, cropping and warping data calculation, re-cropping and image distortion processing are also similar. In other words, when different zooming requests are processed, similar or same image capture or data processing operations may exist due to similar or same zooming parameters. Therefore, when zooming requests are processed, to reduce processing time, intermediate data may be obtained through preliminary cropping processing, re-cropping processing, and distortion processing based on an original preview image obtained relying on a previous zooming request. This is another factor that the third zooming request can be processed by cutting in line.

In an example, zoom ratios of the zooming requests 20 to 29 that are generated earlier in the request queue may be sequentially "2.8x, 2.0x, 3.5x, 2.8x, 2.5x, 1x, 2.5x, 3.5x, 3x, 3.2x", and a zoom ratio of the latest zooming request 30 may be "3.1x". Then, when the user applies a zooming operation corresponding to the newly generated zooming request 30, the mobile terminal may be processing the previous zooming request 20, or processing the previous zooming requests 20 to 22, in other words, a plurality of different previous zooming requests may be in a state of being processed, but processing points of the plurality of previous zooming requests that are being processed are different. Therefore, some previous zooming requests, for example, the previous zooming requests 23 to 29, between the latest zooming request 30 and the previous zooming request 20 that is being processed or the previous zooming requests 20 to 22 may no longer be actual zooming requirements of the user, and it may be considered that the latest generated zooming request cuts in line to be processed when the previous zooming requests are being processed or after the previous zooming requests are processed.

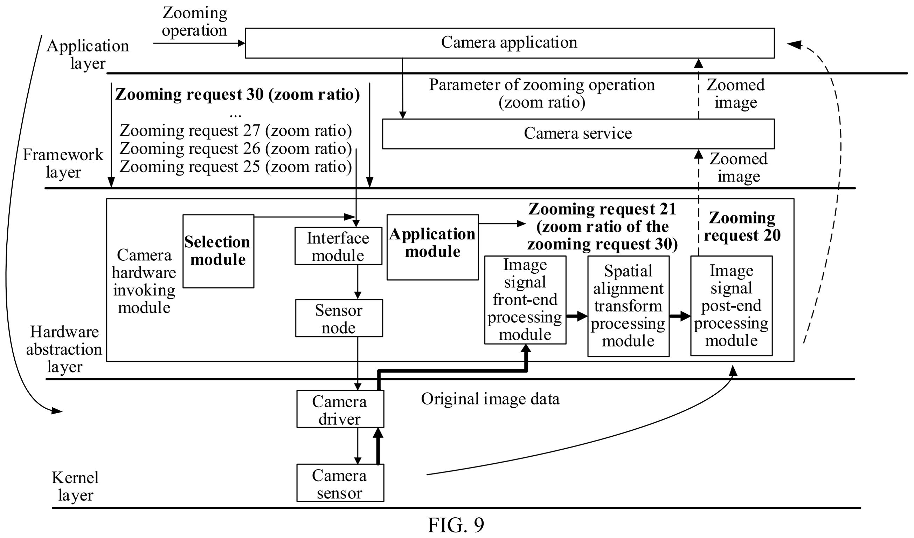

FIG. 9 is a diagram of a later zooming operation cutting in line to be processed in advance at a position of a zooming request generated earlier in an internal software architecture layer in the display control method according to an embodiment of this application.

At an application level, a mobile terminal continuously receives a plurality of zooming operations, separately defines, in the plurality of zooming operations that are not displayed currently, a zooming operation with the earliest receiving time as a first zooming operation, and defines a zooming operation with the latest receiving time as a third zooming operation. At least one zooming operation received between the first zooming operation and the third zooming operation are all second zooming operations. In a display sequence, after displaying a first zoomed image, the mobile terminal directly displays the third zooming operation, and does not display a second zoomed image corresponding to the second zooming operation. Therefore, the at least one second zooming operation in between may not need to be responded to at all, or only some second zooming operations may need to be responded to. As shown in FIG. 9, the zooming request 20 has gone through image obtaining operations and is about to be sent for display. The zooming request 20 corresponds to the first zoomed image of the first zooming operation. The zooming request 30 is the latest generated third zooming request, and zooming requests from the zooming request 21 to the zooming request 29 correspond to the second zooming requests. Before the second zooming requests are processed and the corresponding second zoomed images (for example, a zoomed image of the zooming request 21) are displayed, the third zooming request (a zoomed image of the zooming request 30) jumps to be displayed.

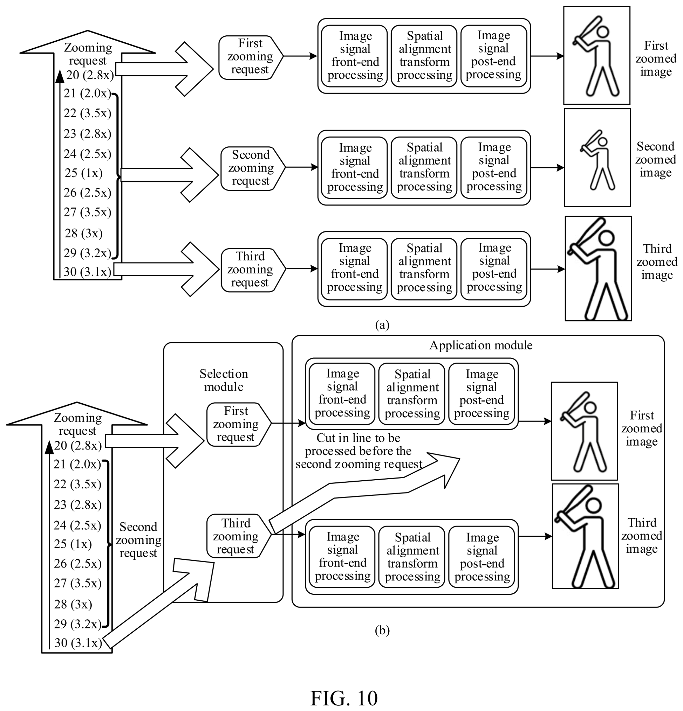

FIG. 10 is a diagram of an internal image obtaining operation and external image display according to a display control method.
(a) in FIG. 10 is a diagram when the third zooming request is not responded to in advance, to be specific, the mobile terminal sequentially responds to the first zooming request, the at least one second zooming request, and the third zooming request, and sequentially correspondingly displays the first zoomed image, the at least one second zoomed image, and the third zoomed image.
(b) in FIG. 10 is a diagram of responding to the third zooming request in advance, to be specific, the mobile terminal responds to the cut-in-line third zooming request after responding to the first zooming request, and displays the cut-in-line third zoomed image after displaying the first zoomed image.

It can be seen by comparing (a) and (b) in FIG. 10 that, the third zooming operation applied by the user later can be quickly responded to and displayed, which may intuitively improve zooming experience of the user.

In addition, considering that zoom ratios of different zooming requests may be greatly different, if a previous zooming request is randomly selected to be cut in line, a technical problem such as a poor preview image switching effect may be caused due to the large zoom ratio difference. According to the display control method provided in the embodiments of this application, it is considered that a zooming request suitable for jumping of the third zooming request is first selected from the plurality of previous second zooming requests, and the third zooming request cuts in line to the selected second zooming request for processing. For example, in the foregoing example in FIG. 10, zoom ratios of the zooming request 23 (zoom ratio 2.8x), the zooming request 28 (zoom ratio 3x), and the like in the at least one second zooming request are all close to the zoom ratio (zoom ratio 3.1x) of the third zooming request (namely, the zooming request 30). Then, it may be considered that the third zooming request cuts in line to be processed in advance when the zooming requests having close zoom ratios are being processed or after the zooming requests having close zoom ratios are processed. In this way, a response delay of a later zooming request can be reduced, and stability and smoothness of zooming preview display can be optimized.

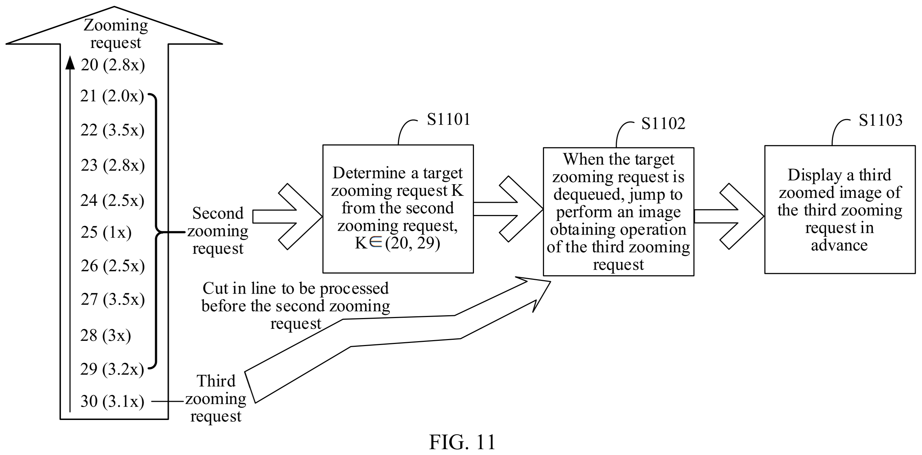

FIG. 11 is a schematic flowchart of selecting a target zooming request in a display control method according to an embodiment of this application. The procedure mainly includes the following steps:
Step S1101: Select a target zooming request for jumping from second zooming requests.
Step S1102: When the target zooming request is dequeued, jump to perform an image obtaining operation of a third zooming request.
Step S1103: Display a third zoomed image of the third zooming request in advance.

The request queue maintained by the mobile terminal may include: a first zooming request (the zooming request 20) to be sent for display, a plurality of second zooming requests (the zooming requests 21 to 29) that are generated earlier and whose corresponding zoomed images are not displayed, and the latest generated third zooming request (the zooming request 30). Generation time of the zooming requests are arranged in sequence along a direction of the arrow, to be specific, generation time of the previous zooming request 20 is the earliest, generation time of the previous zooming request 21 is only later than the generation time of the previous zooming request 20, and generation time of the third zooming request 30 is the latest.

As shown in FIG. 11, a second zooming request K is selected from the second zooming requests 21 to 29 as the target zooming request, where K is any integer greater than 20 and less than 29. When selecting, for the third zooming request, the target zooming request to be jumped to for cutting in line, the mobile terminal may select, based on the zoom ratios of the second zooming requests, the target zooming request by considering impact of the zoom ratio on a calculation amount or on display switching smoothness. It is clear that, the target zooming request suitable for cutting in line may alternatively be selected based on whether a real-time status of each second zooming request is a state of waiting to be dequeued in the request queue or a dequeued state in a data processing operation. In another case, the mobile terminal may alternatively select, from the plurality of previous second zooming requests based on a lens type required by the third zooming request, a target zooming request whose lens matches the requirement. This is not limited.

After the target zooming request to which the third zooming request can jump to is determined according to the foregoing steps, the third zooming request can be processed in advance. There may be a plurality of specific solutions of processing in advance. For example, a data processing operation of the third zooming request may be jumped to be performed after a data processing operation of the target zooming request is completed. Alternatively, the data processing operation of the third zooming request may be jumped to be performed when the target zooming request completes a processing point, for example, completes an image signal front-end processing point, or completes a spatial alignment transform processing point, or completes an image signal post-end processing point.

The mobile terminal processes the third zooming request in advance when processing the target zooming request, and a third zoomed image corresponding to the third zooming request can be obtained after the processing. In this case, the mobile terminal can preview and display the third zoomed image. The third zoomed image is previewed and displayed, and a zooming effect of being responded to in time can be directly seen by the user, and is a basis for the user to judge zooming experience. The latest generated zooming request is processed and displayed in advance, thereby greatly optimizing photographing preview experience of the user.

Still refer to the foregoing FIG. 9, the mobile terminal further includes a selection module, and the hardware abstraction layer further includes an application module. The selection module determines a target zooming request to which the third zooming request jumps; the application module modifies a target zoom ratio of the target zooming request to the third zoom ratio; and the data processing module executes, an image obtaining operation corresponding to the modified target zooming request, to obtain the third zoomed image.

In addition, during specific implementation, it may be considered that the data processing operation of the target zooming request is completed first, to obtain a corresponding target preview image, the target preview image is sent for display, and then a latest preview image corresponding to the third zooming request is sent for display, to optimize smoothness of zoomed image switching. It is clear that, to further reduce the response delay, it may also be considered that the data processing operation of the target zooming request does not need to be completed, or the target preview image corresponding to the target zooming request does not need to be sent for display. Instead, the third zoomed image is directly sent for display after a zoomed image of a zooming request previous to the target zooming request is sent for display, to improve timeliness of zooming preview display.

It should be noted that, the display control method provided in the embodiments of this application is more suitable for a case in which there are three or more zooming requests. In this case, a delay of a zooming response is long, and user experience is obviously affected. If there is only one zooming request, in other words, there is no other second zooming request that has not been processed before the third zooming request, the target zooming request does not need to be determined, and the third zooming request is directly processed after the first zooming request is processed. A response delay existing herein includes only processing time of the third zooming request, and does not include processing time of waiting for another previous zooming request. If there is only one previous second zooming request before a latest third zooming request, the third zooming request may also be directly processed after the previous second zooming request is processed, or the second zooming request is directly used as the target zooming request. It is clear that, the third zooming request may alternatively directly jump to the second zooming request for processing in advance, and so on. This is not limited.

The display control method provided in the embodiments of this application may be configured as a solution automatically started in a zooming preview scenario. To be specific, when a mobile terminal is in the zooming preview scenario, the display control method provided in the embodiments of this application is applied in real time or periodically. For example, each time a zooming request is newly generated, the newly generated zooming request may be used as a third zooming request, and a target zooming request for jumping is selected for the third zooming request. If another zooming request (for example, a zooming request 31) is newly generated after the newly generated zooming request (for example, the zooming request 30), the zooming request generated earlier (for example, the zooming request 30) becomes a zooming request previous to the zooming request generated later (for example, the zooming request 31), and the zooming request generated earlier (for example, the zooming request 30) may also be cut in line by the zooming request generated later (for example, the zooming request 31) in a process of waiting for cutting in line to be processed in advance, to preferentially ensure a timely response effect of the latest generated zooming request. This configuration solution may be more suitable for a zooming preview scenario in which the user expects a zooming preview image to be displayed in time.

It is clear that the display control method provided in the embodiments of this application may alternatively be configured as a solution manually started by a user. To be specific, the user may apply a corresponding touch operation on a setting interface of a mobile terminal or on a photographing control of a photographing preview interface, to instruct to apply the display control method provided in the embodiments of this application. This configuration solution may be more suitable for a zooming preview scenario in which the user expects to successively display different zooming effects.

The foregoing FIG. 9 to FIG. 11 all show the process of determining, based on the zoom ratio, to respond to the third zooming request in advance. Then, how to select, based on the zoom ratio, the target zooming request suitable for jumping of the third zooming request is described in detail below.

Basically, the mobile terminal may select a second request whose zoom ratio is close to a zoom ratio of the third zooming request as the target zooming request. For example, the mobile terminal first obtains a ratio difference between a second zoom ratio corresponding to each second zooming request and the third zoom ratio, and selects a second zooming request having a ratio difference within the preset range as the target zooming request.

In other cases, the mobile terminal may alternatively select a previous zooming request whose zoom ratio is less than or greater than the zoom ratio of the third zooming request, or whose zoom ratio satisfies another preset condition as the target zooming request.

After each second zooming request is added to the queue, the real-time status includes two types: a state of waiting to be dequeued or a dequeued state. A zooming request in the dequeued state is delivered, and is at a point of performing specific image obtaining operations, sequentially including, according to a time sequence of the image obtaining operations, a point of initial image capture operation, a point of image signal front-end processing operation, and a point of image signal post-end processing operation. Different real-time statuses of the second zooming request means remaining different remaining waiting duration. For example, remaining waiting duration of a previous zooming request in the state of waiting to be dequeued includes at least all processing duration of the zooming request, and may further include processing duration of waiting for another previous zooming request. Remaining waiting duration of a second zooming request in the dequeued state may include a part of processing duration of the second zooming request. The remaining waiting duration of the second zooming request in the dequeued state is shorter, and all processing operations may be completed early.

The mobile terminal may select a solution of a target zooming request for jumping based on only real-time statuses of previous second zooming requests.

Relatively, a zooming request in the dequeued state is responded to earlier than a zooming request in the state of waiting to be dequeued. Further, in these zooming requests in the dequeued state, zooming requests located at the point of spatial alignment transform processing operation and at the point of signal post-end processing operation are responded to earlier. Therefore, to display the third zoomed image corresponding to the third zooming request in advance, a zooming request whose real-time status is the dequeued state may be selected. If there are a plurality of zooming requests in the dequeued state, a second zooming request whose real-time operation point after being dequeued is the point of image signal post-end processing operation or the point of spatial alignment transform processing operation may be selected and determined as the target zooming request. This solution, in which the target zooming request for jumping is selected only with reference to the real-time status and not depending on the zoom ratio, is more applicable to a one-way zooming scenario in which the zoom ratio is gradually increased or gradually decreased, for example, a one-way zooming scenario in which the zoom ratio is gradually increased from 1x to 10x, or the zoom ratio is gradually decreased from 20x to 1x. The solution of selecting the target zooming request with reference to the real-time status only can improve timeliness of the third zooming request, but may affect smoothness of preview image switching, and the like.

In addition, the mobile terminal may alternatively select the target zooming request that is more suitable for the third zooming request to jump by combining two factors: the zoom ratio and the real-time status. Specifically, steps of determining the target zooming request may include the following steps:
The mobile terminal first determines, based on the zoom ratio of the third zooming request and with reference to a dependency relationship of similar zoom ratios in the data processing operation, a plurality of zoom ratios to which a data source or a calculation amount of the zoom ratio of the third zooming request is similar in the data processing operation, to obtain a ratio range. Then, some possibly suitable second zooming requests are selected from all the second zooming requests based on the zoom ratio range, and then the target zooming request suitable for the third zooming request to jump to is further selected from the some second zooming requests. For ease of description, the some previous zooming requests may be defined as candidate zooming requests.

The mobile terminal first determines a ratio to which the zoom ratio of the third zooming request belongs. Specifically, the mobile terminal predefines a ratio step according to an association between zoom ratios of focal lengths, and the ratio step indicates a range of zoom ratios with strong association. The mobile terminal determines, by using the zoom ratio of the third zooming request as a center, a ratio range to which the zoom ratio belongs, where a length of the ratio range is equal to the preset adjustment step, and a median of the ratio range is the zoom ratio of the third zooming request. For example, the preset adjustment step predefined by the mobile terminal is 1x, and if the zoom ratio of the third zooming request is 3.1x, a corresponding ratio range may be (2.6x to 3.6x). If the preset adjustment step is 0.4x, a corresponding ratio range may be (2.9x to 3.3x).

It is clear that, there may also be another manner of determining the ratio range. For example, a ratio range of the preset adjustment step before the zoom ratio of the third zooming request may be selected. For example, the preset adjustment step is 0.4x, and if the zoom ratio of the third zooming request is 3.1x, a corresponding ratio range may be (2.7x to 3.1x). It is clear that, there may be other manners for selecting the ratio range, which are not limited.

In the process in which the mobile terminal selects the target zooming request from the candidate zooming requests, if there are at least two candidate zooming requests, a candidate zooming request whose image obtaining operation is an image signal post-end processing operation or a spatial alignment transform processing operation is used as the target zooming request.

All processing operations of each zooming request in the data processing module sequentially include an image signal front-end processing operation, a spatial alignment transform processing operation, and an image signal post-end processing operation. Processing progresses of the spatial alignment transform processing operation and the image signal post-end processing operation are fast. If both the zoom ratio and the real-time status satisfy the condition, a candidate zooming request whose image obtaining operation is the image signal post-end processing operation or the spatial alignment transform processing operation may be preferentially selected as the target zooming request.

It should be noted that, as mentioned in the foregoing implementation, the candidate zooming request, whose zoom ratio falls within the ratio range, and whose real-time status is the dequeued state, is screened from the previous zooming requests. The candidate zooming request mentioned herein is merely used to refer to some zooming requests satisfying the requirement, and is not limited to being assigned or renamed as the candidate zooming request. In other words, the mobile terminal may perform only the action of screening based on the zoom ratio and the ratio range, and does not need to perform the action of object assigning or renaming for the some previous zooming requests obtained through the screening action.

In another case, the mobile terminal may alternatively superimpose zooming lens types to select the target zooming request. Lenses assembled in the mobile terminal mainly include a main camera lens, a wide-angle lens, and a telephoto lens. The main camera lens is a lens with the highest pixels among all camera lenses of the mobile terminal. The wide-angle camera is a camera lens with a wide-angle function. The wide-angle camera has a wider viewing angle and a shorter focal length than a common lens, and is usually used for photographing an object with a very large area. The telephoto camera can take photos from farther, thereby ensuring a definition of the photo. The wide-angle lens and the telephoto lens can usually make up for shortcomings of the main camera lens, and improve a photographing effect. Zooming parameters of the zooming request generated by the mobile terminal may further include a zooming lens type, and the zooming lens type includes at least one of the main camera lens, the telephoto lens, and the wide-angle lens.

The mobile terminal determines the target zooming request based on a zooming lens type of the third zooming request and a zooming lens type of each candidate zooming request. Specifically, a candidate zooming request whose zooming lens type includes the zooming lens type of the third zooming request is used as the target zooming request.

For example, as shown in the foregoing example, the zoom ratio of the zooming request 20 is 2.8x, and a zooming lens type of the zooming request 20 may be the telephoto lens. The zoom ratio of the zooming request 21 is 2.0x, and a zooming lens type of the zooming request 21 may be the main camera lens. The zoom ratio of the third zooming request 30 is 3.1x, and a zooming lens type of the third zooming request 30 may be the telephoto lens. Therefore, a zooming switching type from the zooming request 20 to the third zooming request 30 is zoom in (Zoom In), and the zooming lens type (the main camera lens) included by the zooming request 20 does not include the zooming lens type (the telephoto lens) included by the third zooming request 30. A zooming switching type from the zooming request 21 to the third zooming request 30 is zoom out (Zoom Out), and the zooming lens type (the telephoto lens) included by the zooming request 21 includes the zooming lens type (the telephoto lens) included by the third zooming request 30. In comparison with a solution of selecting the zooming request 20 as the target zooming request, a solution of selecting the zooming request 21 as the target zooming request reduces operations of switching the lens to regenerate the original image and aligning the original image.

After the target zooming request is determined based on the foregoing implementations, there may be a plurality of options for a point to which the mobile terminal enables the third zooming request to jump to in advance.

In an implementation, if the real-time status of the target zooming request is the state of waiting to be dequeued, the third zooming request may be advanced to the end of the target zooming request, and when the target zooming request is dequeued, the image obtaining operation of the third zooming request jumps to be performed.

In another implementation, if the real-time status of the target zooming request is the dequeued state, the real-time status of the third zooming request may jump to the current processing point of the target zooming request. For example, if the real-time point of the target zooming request is the spatial alignment transform processing point, the real-time point of the third zooming request jumps from a waiting point to the spatial alignment transform processing point.

It is clear that, considering continuity between processing points, to be specific, some processing points may include a forward associated processing point on a processing link, or may include a backward associated processing point, and each zooming request needs to be sequentially processed by each processing point on the processing link to obtain a final preview image. For example, if the second zooming request 21 is at the spatial alignment transform processing point, an earlier first zooming request 20 may be at the image signal post-end processing point, a later second zooming request 22 may be at the image signal front-end processing point, and a more later previous zooming request 23 may be at the sensor point. Therefore, when performing jumping to cut in line, it may also be considered that the real-time point of the third zooming request jumps from the waiting point to a processing point before the spatial alignment transform processing point, namely, the image signal front-end processing point. When the target zooming request at the spatial alignment transform processing point enters the image signal post-end processing point associated backward, the third zooming request enters the spatial alignment transform processing point from the image signal front-end processing point.

During specific execution, if the real-time status of the target zooming request is the dequeued state, a target zoom ratio corresponding to the target zooming request is modified to the third zoom ratio, and a remaining image obtaining operation of the modified target zooming request is performed, to obtain the third zoomed image. Based on a first-in-first-out principle of the request queue, the mobile terminal may replace a second zoom ratio of the second zooming request with a third zoom ratio of the third zooming request, so that a zoomed image corresponding to the third zoom ratio is obtained in advance and displayed in advance as the third zoomed image. Alternatively, the at least one second zooming request before the third zooming request may be all discarded after being dequeued, and no image obtaining operation is performed, or the image obtaining operation for the third zooming request is performed after only some image obtaining operations are performed, to ensure that the third zoomed image is obtained and displayed in advance.

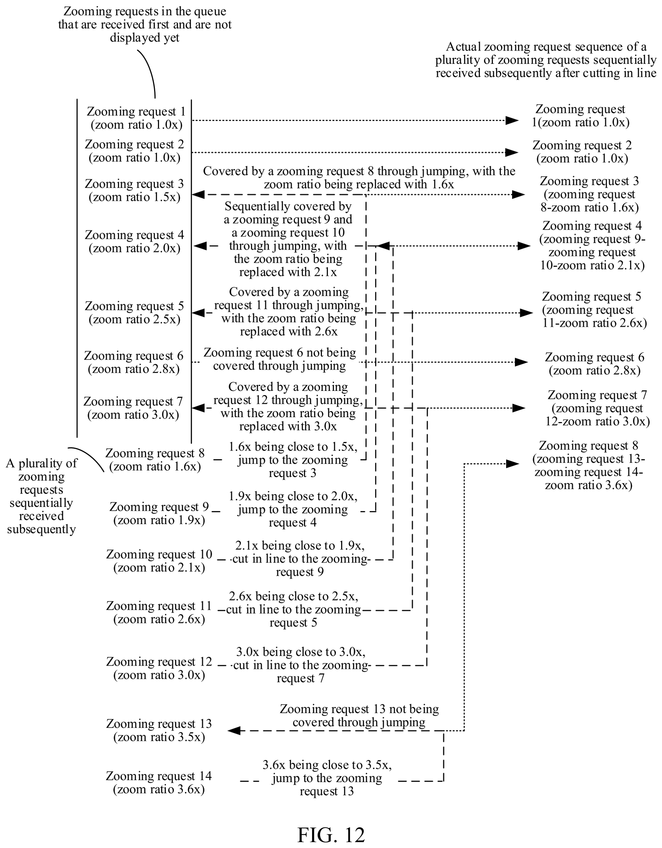

In addition, there is another display control solution in the embodiments of this application. For example, as shown in FIG. 12, if zooming requests 1 to 7 exist in a request queue that is generated earlier and that is not displayed yet, and zooming requests 8 to 14 are sequentially received subsequently, zoom ratios of the zooming requests are shown in FIG. 12. Therefore, when display control is performed based on the zoom ratios, a process of selecting jump solutions for the subsequent zooming requests 8 to 14 in sequence is as follows:
A zoom ratio 1.6x of the zooming request 8 is close to a zoom ratio 1.5x of the zooming request 3, the zooming request 8 jumps to the zooming request 3, and the zoom ratio of the zooming request 3 is modified to the zoom ratio 1.6x of the zooming request 8.
A zoom ratio 1.9x of the zooming request 9 is close to a zoom ratio 2.0x of the zooming request 4, the zooming request 9 jumps to the zooming request 4, and the zoom ratio of the zooming request 4 is modified to the zoom ratio 1.9x of the zooming request 9.
A zoom ratio 2.1x of the zooming request 10 is close to the zoom ratio 1.9x of the zooming request 9, the zooming request 10 jumps again to the zooming request 9 (actual zooming request 4), and the zoom ratio of the zooming request 4 is modified to the zoom ratio 2.1x of the zooming request 10.
A zoom ratio 2.6x of the zooming request 11 is close to a zoom ratio 2.5x of the zooming request 5, the zooming request 11 jumps to the zooming request 5, and the zoom ratio of the zooming request 5 is modified to the zoom ratio 2.6x of the zooming request 11.
A zoom ratio 3.0x of the zooming request 12 is close to a zoom ratio 3.0x of the zooming request 7 (being equal is also considered as being close), the zooming request 12 jumps to the zooming request 7, and the zoom ratio of the zooming request 7 is modified to the zoom ratio 3.0x of the zooming request 12.

There is no previous zooming request suitable for the zooming request 13 to cut in line, and the zooming request 13 may be reserved in original sequence and placed after the zooming request 7 whose zoom ratio is modified, to form a new zooming request 8, and a zoom ratio is 3.5x.

A zoom ratio of the zooming request 14 is close to the zooming request 13 (new zooming request 8), the zooming request 14 jumps to the new zooming request 8, and the zoom ratio of the new zooming request 8 is modified to the zoom ratio 3.6x of the zooming request 14.

In this way, a new zooming request processing sequence and actual zoom ratios shown in the sequence on the right of FIG. 12 can be obtained. It can be obviously learned from FIG. 12 that, a later zooming request is processed in advance, thereby reducing a response delay caused by waiting for image processing operations of a plurality of zooming requests.

In conclusion, in the display control method provided in the embodiments of this application, with reference to zooming parameters such as a zoom ratio of a newly generated third zooming request and a zoom ratio of each zooming request generated earlier, a target zooming request suitable for the third zooming request to jump to is selected from a plurality of zooming requests generated earlier, and the third zooming request jumps to the target zooming request to be processed and sent for display in advance, to reduce a response delay of the third zooming request and optimize hand-following smoothness of zooming preview.

In addition, an embodiment of this application further provides a mobile terminal, including a camera module, a memory, and a processor, and the camera module and the memory are coupled to the processor.

The memory stores computer-executable instructions.

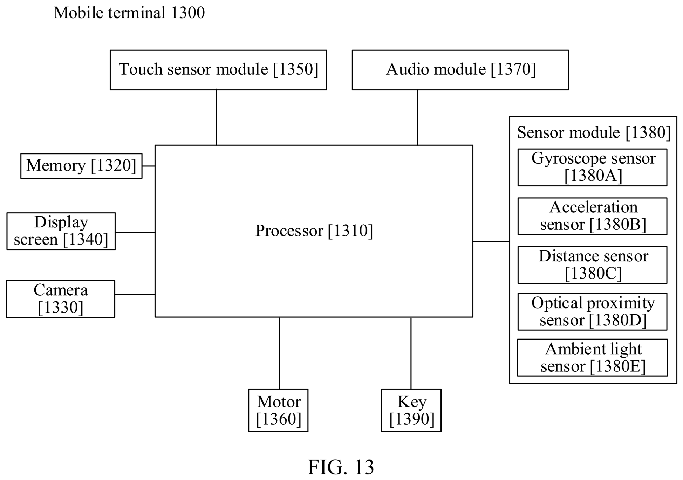

The processor executes the computer-executable instructions stored in the memory, so that the mobile terminal performs the display control method provided in the foregoing embodiments. In addition to the main components, the mobile terminal further includes components for implementing basic functions. Details are described below with reference to FIG. 13.

FIG. 13 is a schematic diagram of a structure of a mobile terminal 1300 according to an embodiment of this application. The mobile terminal 1300 may include a processor 1310, a memory 1320, a camera 1330, a display screen 1340, a touch sensor module 1350, a motor 1360, an audio module 1370, a sensor module 1380, a key 1390, and the like. The sensor module 1380 may include a gyroscope sensor 1380A, an acceleration sensor 1380B, a distance sensor 1380C, an optical proximity sensor 1380D, an ambient light sensor 1380E, and the like.

The structure shown in this embodiment of this application does not constitute a specific limitation on the mobile terminal 1300. The mobile terminal 1300 may include more or fewer components than those shown in the figure, or some components may be combined, or some components may be divided, or different component arrangements may be used. The components shown in the figure may be implemented by hardware, software, or a combination of software and hardware.

The processor 1310 may include one or more processing units. For example, the processor 1310 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be separate devices, or may be integrated into one or more processors.

The controller may be a decision-maker instructing components of the mobile terminal 1300 to work in coordination according to an instruction, and is a nerve center and a command center of the mobile terminal 1300. The controller may generate an operation control signal according to instruction operation code and a time-sequence signal, and control fetching and execution of instructions.

A memory 1320 may be further arranged in the processor 1310, and is configured to store instructions and data. In some embodiments, the memory 1320 in the processor 1310 is a cache, and can store instructions or data that is recently used or cyclically used by the processor 1310. If the processor 1310 needs to use the instructions or the data again, the processor may directly invoke the instructions or the data from the memory 1320, to avoid repeated access and reduce waiting time of the processor 1310, thereby improving system efficiency.

In some embodiments, the processor 1310 may include an interface. The interfaces may include an inter-integrated circuit (Inter-Integrated Circuit, I2C) interface, an inter-integrated circuit sound (Inter-Integrated Circuit Sound, I2S) interface, a pulse code modulation (Pulse Code Modulation, PCM) interface, a universal asynchronous receiver/transmitter (Universal Asynchronous Receiver/Transmitter, UART) interface, a mobile industry processor interface (Mobile Industry Processor Interface, MIPI), a general-purpose input/output (General-Purpose Input/Output, GPIO) interface, a SIM card interface, a USB interface, and/or the like.

The I2C interface is a bidirectional synchronization serial bus, and includes a serial data line (Serial Data Line, SDA) and a serial clock line (Derail Clock Line, SCL). In some embodiments, the processor 1310 may include a plurality of I2C buses. The processor 1310 may be separately coupled to a touch sensor, a charger, a flash light, the camera 1330, and the like through different I2C bus interfaces. For example, the processor 1310 may be coupled to the touch sensor through the I2C interface, so that the processor 1310 communicates with the touch sensor through the I2C bus interface, to implement a touch function of the mobile terminal 1300.

The I2S interface may be configured for audio communication. In some embodiments, the processor 1310 may include a plurality of I2S buses. The processor 1310 may be coupled to the audio module 1370 through the I2S bus, to implement communication between the processor 1310 and the audio module 1370. In some embodiments, the audio module 1370 may transmit an audio signal to a communication module by using the I2S interface, to implement a function of answering a call by using a Bluetooth headset.

The PCM interface may also be configured to perform audio communication, to sample, quantize, and encode an analog signal. In some embodiments, the audio module 1370 and the communication module may be coupled through a PCM bus interface. In some embodiments, the audio module 1370 may alternatively transmit an audio signal to the communication module through the PCM interface, to implement a function of answering a call by using a Bluetooth headset. Both the I2S interface and the PCM interface can be used for audio communication, and sampling rates of the two interfaces are different.

The UART interface is a universal serial data bus and is configured to perform asynchronous communication. The bus is a bidirectional communication bus. The bus converts data to be transmitted between serial communication and parallel communication. In some embodiments, the UART interface is generally used for connecting the processor 1310 to the communication module. For example, the processor 1310 communicates with a Bluetooth module through the UART interface, to implement a Bluetooth function. In some embodiments, the audio module 1370 may transmit an audio signal to the communication module through the UART interface, to implement a function of playing music by using a Bluetooth headset.

The MIPI interface may be configured to connect the processor 1310 to peripheral components such as the display screen 1340 and the camera 1330. The MIPI interface includes a camera serial interface (Camera Serial Interface, CSI), a display serial interface (Display Serial Interface, DSI), and the like. In some embodiments, the processor 1310 communicates with the camera 1330 through the CSI interface, to implement a photographing function of the mobile terminal 1300. The processor 1310 communicates with the display screen 1340 through the DSI interface, to implement a display function of the mobile terminal 1300.

The GPIO interface may be configured by software. The GPIO interface may be configured as a control signal, or may be configured as a data signal. In some embodiments, the GPIO interface may be configured to connect the processor 1310 to the camera 1330, the display screen 1340, the communication module, the audio module 1370, the sensor module 1380, and the like. The GPIO interface may also be configured as an I2C interface, an I2S interface, a UART interface, an MIPI interface, or the like.

The USB interface may be a mini USB interface, a micro USB interface, a USB Type C interface, or the like. The USB interface may be configured to connect a charger to charge the mobile terminal 1300, or may be configured for data transmission between the mobile terminal 1300 and a peripheral device, or may be connected to a headset to play audio through the headset. The USB interface may alternatively be configured to connect to another mobile terminal such as an AR device.

An interface connection relationship among the modules shown in this embodiment of the present invention is merely an example for description, and does not constitute a limitation on the structure of the mobile terminal 1300. The mobile terminal 1300 may alternatively use an interface connection manner different from that in this embodiment of the present invention, or use a combination of a plurality of interface connection manners.

The wireless communication function of the mobile terminal 1300 can be implemented by using the antenna, the radio frequency module, the communication module, the modem, the baseband processor, and the like. The antenna may be configured to transmit and receive electromagnetic wave signals. Each antenna in the mobile terminal 1300 may be configured to cover one or more communication frequency bands. Different antennas may further be multiplexed to improve utilization of the antennas.

The mobile terminal 1300 implements a display function by using the GPU, the display screen 1340, the application processor, and the like. The GPU is a microprocessor for image processing, and connects the display screen 1340 and the application processor. The GPU is configured to perform mathematical and geometric calculations, and is configured to render graphics. The processor 1310 may include one or more GPUs, and execute program instructions to generate or change display information.

The display screen 1340 is configured to display an image, a video, and the like. The display screen 1340 includes a display panel. The display panel may use a liquid crystal display (Liquid Crystal Display, LCD), an organic light-emitting diode (Organic Light-Emitting Diode, OLED), an active-matrix organic light emitting diode or an active matrix organic light emitting diode (Active-Matrix Organic Light Emitting Diode, AMOLED), a flex light-emitting diode (Flex Light-Emitting Diode, FLED), a mini LED, a micro LED, a micro-OLED, a quantum dot light emitting diode (Quantum Dot Light Emitting Diodes, QLED), or the like. In some embodiments, the mobile terminal 1300 may include one or N display screens 1340, where N is a positive integer greater than 1.

The mobile terminal 1300 may implement a photographing function by using the ISP, the camera 1330, the video codec, the GPU, the display screen, the application processor, and the like.

The ISP is configured to process data fed back by the camera 1330. For example, during photographing, a shutter is enabled. Light is transmitted to a photosensitive element of the camera through a lens, and an optical signal is converted into an electrical signal. The photosensitive element of the camera transmits the electrical signal to the ISP for processing, and the electrical signal is converted into an image visible to a naked eye. The ISP may further perform algorithm optimization on noise, brightness, and chrominance of the image. The ISP may further optimize parameters such as exposure and color temperature of a photographed scene. In some embodiments, the ISP may be disposed in the camera 1330.

The camera 1330 is configured to capture a still image or video. An optical image is generated for an object by using the lens and is projected onto the photosensitive element. The photosensitive element may be a charge coupled device (Charge Coupled Device, CCD) or a complementary metal-oxide-semiconductor (Complementary Metal-Oxide-Semiconductor, CMOS) phototransistor. The photosensitive element converts an optical signal into an electrical signal, and then transfers the electrical signal to the ISP, to convert the electrical signal into a digital image signal. The ISP outputs the digital image signal to the DSP for processing. The DSP converts the digital image signal into an image signal in standard RGB and YUV formats. In some embodiments, the mobile terminal 1300 may include one or N cameras 1330, where N is a positive integer greater than 1.

The digital signal processor is configured to process a digital signal, and in addition to a digital image signal, the digital signal processor may further process another digital signal. For example, when the mobile terminal 1300 is performing frequency selection, the digital signal processor is configured to perform Fourier transform on energy of frequencies.

The video encoder and decoder is configured to compress or decompress a digital video. The mobile terminal 1300 may support one or more types of video codecs. In this way, the mobile terminal 1300 can play or record videos in a plurality of encoding formats, for example, moving picture experts group (Moving Picture Experts Group, MPEG) 1, MPEG 2, MPEG 13, and MPEG 4.

The NPU is a neural-network (Neural-Network, NN) computing processor. By drawing on a structure of a biological neural network, for example, by drawing on a transmission mode between human brain neurons, the NPU quickly processes input information, and may further continuously perform self-learning. The NPU may be used for implementing applications such as intelligent cognition of the mobile terminal 1300, for example, image recognition, facial recognition, speech recognition, and text understanding.

The external memory interface may be configured to connect to an external storage card such as a micro SD card, to expand a storage capability of the mobile terminal 1300. The external storage card communicates with the processor 1310 through the external memory interface, to implement a data storage function, for example, store files such as music and a video into the external storage card.

The internal memory may be configured to store computer-executable program code. The executable program code includes instructions. The processor 1310 runs the instructions stored in the internal memory, to perform various function applications and data processing of the mobile terminal 1300. The memory 1320 may include a program storage area and a data storage area. The program storage area may store an operating system, an application needed by at least one function (for example, a sound playback function or an image display function), and the like. The data storage area may store data (for example, audio data and a phone book) created according to the use of the mobile terminal 1300. In addition, the internal memory 1320 may include a high-speed random access memory, or may include a non-volatile memory such as at least one magnetic disk storage device, a flash memory device, or a universal flash storage (Universal Flash Storage, UFS).

The mobile terminal 1300 may implement an audio function such as photographing control by voice, music playing, or recording by using a speaker of the audio module 1370, a receiver, a microphone, a headset jack, the application processor, and the like.

The audio module 1370 is configured to convert digital audio information into an analog audio signal, and convert an analog audio input into a digital audio signal. The audio module 1370 may be further configured to encode and decode an audio signal. In some embodiments, the audio module 1370 may be disposed in the processor 1310, or some functional modules of the audio module 1370 are disposed in the processor 1310.

The speaker, also referred to as a "horn", is configured to convert an electrical audio signal into a sound signal. Music can be listened to or a hands-free call can be answered by using the speaker in the mobile terminal 1300.

The receiver, also referred to as a "handset", is configured to convert an audio electrical signal into a sound signal. When the mobile terminal 1300 is used to answer a call or receive voice information, the receiver may be put close to a human ear, to receive the voice information.

The microphone, also referred to as a "mic" and a "mike", is configured to convert a sound signal into an audio electrical signal. When making a call or transmitting speech information, a user may make a sound with the mouth approaching the microphone, to input a sound signal into the microphone. At least one microphone may be arranged in the mobile terminal 1300. In some embodiments, two microphones may be arranged in the mobile terminal 1300, to collect a sound signal and implement a noise reduction function. In some embodiments, three, four, or more microphones may be alternatively arranged in the mobile terminal 1300, to collect a sound signal, implement noise reduction, recognize a sound source, achieve a directional recording function, and the like.

The headset jack is configured to be connected to a wired headset. The headset jack may be the USB interface, or may be a 3.5 mm open mobile terminal platform (Open Mobile Terminal Platform, OMTP) standard interface, or a cellular telecommunications industry association of the USA (Cellular Telecommunications Industry Association of the USA, CTIA) standard interface.

The key 1390 includes a power key, a volume key, and the like. The key 1390 may be a mechanical key, or a touch-type key. The mobile terminal 1300 receives an input from the key 1390, and generate a key signal input related to user setting and function control of the mobile terminal 1300.

The motor 1360 may generate a vibration prompt. The motor 1360 may be used for an incoming call vibration prompt and a touch vibration feedback. For example, touch operations performed on different applications (for example, photo taking and audio playing) may correspond to different vibration feedback effects. The motor 1360 may also correspond to different vibration feedback effects for touch operations applied to different regions of the display screen 1340. Different application scenarios (for example, a time reminder, information receiving, an alarm clock, and a game) may also correspond to different vibration feedback effects. Customization of a touch vibration feedback effect may also be supported. In addition, the motor may further be used in a camera zooming photographing scenario, and implement lens switching between different focal lengths by driving movement of the lens.

The sensor module 1380 may include a gyroscope sensor 1380A, an acceleration sensor 1380B, a distance sensor 1380C, an optical proximity sensor 1380D, and an ambient light sensor 1380E. The gyroscope sensor 1380A and the acceleration sensor 1380B may be used for functions such as posture correction or horizontal positioning during photographing. The distance sensor 1380C may be used for determining a depth of field or image processing during photographing. The optical proximity sensor 1380D and the ambient light sensor 1380E may be used for sensing ambient light and adjusting an image brightness value during photographing.

The display control method in the foregoing embodiments may be implemented by the mobile terminal 1300 having the foregoing hardware structure.

Based on the foregoing embodiment, an embodiment of this application further provides a display control apparatus. The control apparatus includes a processor. The processor is configured to perform the display control method provided in the foregoing embodiments.

An embodiment of this application further provides a computer-readable storage medium. The computer-readable storage medium stores a computer program. When the computer program is run on a computer, the computer is enabled to perform the display control method provided in the foregoing embodiments.

An embodiment of this application further provides a computer program product including instructions. When the computer program product runs on a computer, the computer is enabled to perform the display control method provided in the foregoing embodiments.

For specific implementations of the mobile terminal, the display control apparatus, the computer-readable storage medium, and the computer program product including instructions and technical effects brought, refer to specific implementations of the display control method provided in the foregoing embodiments and the technical effect brought thereby. Details are not described herein again.

In some embodiments, the foregoing descriptions about implementations allow a person skilled in the art to understand that, for the purpose of convenient and brief description, division of the foregoing functional modules is taken as an example for illustration. In actual application, the foregoing functions can be allocated to different modules and implemented based on a requirement, that is, an inner structure of an apparatus is divided into different functional modules to implement all or some of the functions described above. For a specific work process of the system, apparatus and unit described above, a corresponding process in the aforementioned method embodiments may be referred to, and the details are not described herein again.

In the embodiments of this application, functional units in the embodiments may be integrated into one processing unit, or each of the units may exist alone physically, or two or more units are integrated into one unit. The integrated unit may be implemented in the form of hardware, or may be implemented in the form of a software functional unit.

When the integrated unit is implemented in the form of a software functional unit and sold or used as an independent product, the integrated unit may be stored in a computer-readable storage medium. Based on such an understanding, the technical solutions of embodiments of this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like) or a processor to perform all or some of the steps of the methods described in the embodiments of this application. The foregoing storage medium includes: any medium that can store program code, such as a flash memory, a removable hard disk, a read-only memory, a random access memory, a magnetic disk, or an optical disc.

The foregoing descriptions are merely specific implementations of the embodiments of this application, but the protection scope of the embodiments of this application is not limited thereto. Any variation or replacement within the technical scope disclosed in the embodiments of this application shall fall within the protection scope of the embodiments of this application. Therefore, the protection scope of the embodiments of this application shall be subject to the protection scope of the claims.

## Claims

1. A display method, applied to a mobile terminal, wherein the display method comprises:
receiving a first zooming operation and a second zooming operation, wherein receiving time of the first zooming operation is earlier than receiving time of the second zooming operation, the first zooming operation corresponds to a first zoom ratio, and the second zooming operation corresponds to a second zoom ratio; and
when a ratio difference between the second zoom ratio and the first zoom ratio is within a preset range, processing first image data at the second zoom ratio to obtain a second zoomed image, wherein the first image data is image data obtained based on the first zooming operation.

2. The display method according to claim 1, wherein the receiving a first zooming operation comprises:
receiving at least two first zooming operations, wherein receiving time of each first zooming operation is earlier than the receiving time of the second zooming operation; and
the when a ratio difference between the second zoom ratio and the first zoom ratio is within a preset range, processing first image data at the second zoom ratio to obtain a second zoomed image comprises:
searching the at least two first zoom ratios for a target zoom ratio, wherein the target zoom ratio is a first zoom ratio, and a ratio difference between the first zoom ratio and the second zoom ratio is within the preset range; and
processing target image data at the second zoom ratio, to obtain the second zoomed image, wherein the target image data is image data obtained based on a target zooming operation, and the target zooming operation is a first zooming operation corresponding to the target zoom ratio.

3. The display method according to claim 2, wherein the searching the at least two first zoom ratios for a target zoom ratio comprises:
determining a target zooming request corresponding to the target zoom ratio from at least two first zooming requests, wherein each first zooming request corresponds to a first zooming operation, generation time of each first zooming request is earlier than generation time of a second zooming request corresponding to the second zooming operation, and the target zooming request is a first zooming request corresponding to the target zoom ratio; and
the processing target image data at the second zoom ratio, to obtain the second zoomed image comprises:
responding to the target zooming request and the second zooming request, and processing the target image data at the second zoom ratio, to obtain the second zoomed image.

4. The display method according to claim 3, wherein the responding to the target zooming request and the second zooming request, and processing the target image data at the second zoom ratio, to obtain the second zoomed image comprises:
responding to the target zooming request, and obtaining the target image data;
processing the target image data at the second zoom ratio, to obtain the second zoomed image; and
displaying the second zoomed image.

5. The display method according to claim 3, wherein the responding to the target zooming request and the second zooming request, and processing the target image data at the second zoom ratio, to obtain the second zoomed image comprises:
responding to the target zooming request, obtaining the target image data, processing the target image data at the target zoom ratio to obtain a target zoomed image, and canceling displaying the target zoomed image; and
responding to the second zooming request, obtaining second image data, processing the second image data at the second zoom ratio to obtain the second zoomed image, and displaying the second zoomed image.

6. The display method according to claim 3, wherein the responding to the target zooming request and the second zooming request, and displaying the second zoomed image comprises:
without responding to the target zooming request, responding to the second zooming request, and obtaining second image data; and
processing the second image data at the second zoom ratio to obtain the second zoomed image, and displaying the second zoomed image.

7. The display method according to any one of claims 3 to 6, wherein after obtaining the second zoomed image, the display method further comprises:
stopping responding to a fourth zooming request, wherein the fourth zooming request is a first zooming request whose generation time is after that of the target zooming request.

8. The display method according to any one of claims 4 to 7, wherein the receiving a first zooming operation and a second zooming operation comprises:
receiving the first zooming operation, generating the first zooming request, and adding the first zooming request to a request queue; and
receiving the second zooming operation, generating the second zooming request, and adding the second zooming request to the request queue, wherein the request queue is a first-in-first-out queue, and time at which the first zooming request is added to the request queue is earlier than time at which the second zooming request is added to the request queue; and
the responding to the target zooming request comprises:
responding to the target zooming request after the target zooming request is dequeued from the request queue.

9. The display method according to claim 8, wherein the target zooming request comprises a first zooming request that is already dequeued from the request queue, and a ratio difference between a zoom ratio of the first zooming request and the second zoom ratio is within the preset range.

10. The display method according to claim 9, wherein image processing operations corresponding to zooming requests after the zooming requests are dequeued sequentially comprise: an original image capture operation, an image signal front-end processing operation, a spatial alignment transform processing operation, and an image signal post-end processing operation; and
the determining a target zooming request corresponding to the target zoom ratio from at least two first zooming requests comprises:
selecting a first zooming request subjected to the spatial alignment transform processing operation or the image signal post-end processing operation as the target zooming request, wherein a ratio difference between a zoom ratio of the first zooming request and the second zoom ratio is within the preset range.

11. The display method according to any one of claims 1 to 10, wherein the first zooming operation comprises a first target operation and a second target operation, the second zooming operation comprises a third zooming operation and a fourth zooming operation, receiving time of the first target operation is earlier than receiving time of the third zooming operation, and receiving time of the second target operation is earlier than receiving time of the fourth zooming operation; and the first target operation corresponds to a first target zoom ratio, the second target operation corresponds to a second target zoom ratio, the third zooming operation corresponds to a third zoom ratio, and the fourth zooming operation corresponds to a fourth zoom ratio; and
the receiving a first zooming operation and a second zooming operation, and when a ratio difference between the second zoom ratio and the first zoom ratio is within a preset range, processing first image data at the second zoom ratio to obtain a second zoomed image comprises:
receiving the first target zooming operation, the second target zooming operation, the third zooming operation, and the fourth zooming operation;
when a ratio difference between the first target zoom ratio and the third zoom ratio is within the preset range, processing first target image data at the third zoom ratio to obtain a third zoomed image, wherein the first target image data is image data obtained based on the first target zooming operation; and
when a ratio difference between the second target zoom ratio and the fourth zoom ratio is within the preset range, processing second target image data at the fourth zoom ratio to obtain a fourth zoomed image, wherein the second target image data is image data obtained based on the second target zooming operation.

12. A mobile terminal, comprising a camera module, a memory, and a processor, wherein the camera module and the memory are coupled to the processor;
the memory stores computer-executable instructions; and
the processor executes the computer-executable instructions stored in the memory, to enable the mobile terminal to perform the display method according to any one of claims 1 to 11.

13. A computer-readable storage medium, wherein a computer program is stored in the computer-readable storage medium, and when the computer program is run on a computer, the computer is enabled to perform the display method according to any one of claims 1 to 11.
